# EUROPEAN PATENT SPECIFICATION

(11) **EP 1 150 863 B1**
(45) Date of publication and mention of the grant of the patent: **05.03.2003**
(21) Application number: 99961256.7
(22) Date of filing: 23.12.1999
(51) Int. Cl.: B60R 9/10

(54) **BICYCLE CARRIER**
DACHFAHRRADTRÄGER
PORTE-BICYCLETTES

(30) Priority: 11.02.1999 IL 12850299; 08.09.1999 IL 13180499
(43) Date of publication of application: 07.11.2001
(73) Proprietor: Geffen, Nir, 47322 Ramat Hasharon (IL)
(72) Inventor: Geffen, Nir, 47322 Ramat Hasharon (IL)
(74) Representative: Maureau, Philippe
(86) International application number: IL9900697
(87) International publication number: WO00047450

(56) References cited:
- CH-A- 637 580
- DE-A- 2 635 825
- FR-A- 2 251 461
- FR-A- 2 270 472
- FR-A- 2 421 761

## Description

### Field of the Invention

The present invention relates to a bicycle carrier capable of being mounted on the top of a vehicle. In particular the present invention relates to a carrier on top of a vehicle for carrying one or more bicycles, individually or in clamped pairs or clusters, each in a vertically inverted configuration.

### Background of the Invention

Many types of bicycle carriers for vehicles are known. Some of these carriers are attached to the frame of the roof rack of the vehicle. For example, bicycle carriers for a top of a vehicle are disclosed, in US 3,848,784, US 4,088,253, and in US 5,360,151. US 4,219,142 discloses a bicycle carrier for carrying a bicycle in an upside down configuration on a roof of a vehicle, which comprises suction cups. This carrier requires the removal of the bicycle seat.

Some conventional bicycle carriers hold the bicycle in a prone configuration. This configuration suffers from the drawback that the bicycle occupies a large space, and therefore no more than one or two bicycles can be simultaneously carried. Other conventional carriers hold the bicycle in a standing configuration. In this case, the bicycle stands on its wheels and is coupled to the carrier. In the standing configuration, the bicycle occupies less space and therefore, more bicycles, up to four; can be carried side by side, possibly in a staggered arrangement. US 3,848,784 discloses a bicycle carrier which holds the bicycle in a standing configuration, and which requires the disassembling of the front wheel of the bicycle.

However, the carrying of bicycles by the conventional standing configuration type carriers suffers from one or more of the following drawbacks. The drag contribution of the bicycle due to the air flow, particularly when the vehicle moves fast, is significant. The carriers of the standing configuration type couple each bicycle in two locations to the roof rack, one at the bicycle's front wheel, and a second at the bicycle back wheel. Therefore, these carriers are relatively complicated in structure. These prior art type carriers generally comprise strong elongated levers for supporting the bicycle at its upper portion, in order to overcome the forces on the bicycle. Moreover, the mounting of the bicycle on the rooftop by this type of carrier is complicated, requires significant effort, and is time consuming to mount. Furthermore, the existing bicycle carriers cause a significant drag even when they are not in use, and when bicycles are not connected to them, as they generally comprise some high, and/or large surface parts. The significant drag generally results in an increase in fuel consumption, with accompanying high levels of noise.

US 3,931,919 represents an improvement on the above systems in that a bicycle carrier is provided for carrying a single bicycle in upside-down configuration on the roof of a vehicle, without the need to dismantle any part of the bicycle. However, the carrier disclosed by this patent has a number of drawbacks. For example, three clamps are used for securing a bicycle onto two parallel bars on the roof of a vehicle, and each of the clamps requires some time and expertise to operate. Furthermore, while it is mentioned that between 4 and 6 bicycles may be secured on a vehicle, no details are disclosed on how more than one bicycle is actually secured on the vehicle. In fact, the clamps are each adapted for securing a single bicycle only onto the roof, and therefore in order to secure more bicycles, further sets of three clamps each would be required, spaced on the parallel bars from the clamps of the first bicycle, thereby severely limiting the number of bicycles that may be secured on a given vehicle roof.

In US 3,752,375, a carrier is disclosed for carrying on the trunk of a vehicle a number of bicycles in upside configuration and staggered longitudinal relationship. For each bicycle, two seating members are used for seating the handlebars thereof, and straps are used around the steering column and around the rear wheel to secure the bicycle onto the carrier. Staggering between adjacent bicycles is made possible by offsetting the longitudinal position of each adjacent pair of cups. The carrier is thus awkward to use, relying on a multitude of straps for securing each bicycle, which gets more difficult as more bicycles are added onto the carrier. Furthermore, the pairs of cups are adapted for seating only a single bicycle onto the trunk, and therefor in order to seat more bicycles, further sets of cups are required. The system is in not versatile, and is in any case not meant for use on the roof of a vehicle, but rather restricted to the trunk thereof only.

DE-A-2 635 825 showing the features of the preamble of claim 1 relates to a cumbersome assembly comprising a clamping system wherein a plurality of individual gripping units, each for gripping a different part of different bicycles, are secured to a lower transverse bar of a roof-rack. An upper transverse member is selectively openable and closable with respect to the lower transverse bar to enclose the plurality of gripping units. CH-A-637 580 shows an arrangement for clamping different bicycles individually to a roof-rack of a vehicle. In FR-A-2 251 461, FR-A-2 421 761, FR-A-2 270 472, clamping units of different forms, for clamping the front or rear parts of a bicycle, are shown.

A bicycle carrier system according to the preamble of claim 1 is thus known from the prior art discussed herein.

It is therefore an object of the invention to provide a bicycle carrier for the rooftop of a vehicle, which is simple in structure.

It is another object of the present invention to provide a bicycle carrier that provides a strong and secure mounting for one or more bicycles thereto.

It is still another object of the invention to provide a bicycle carrier that enables easy, fast and comfortable mounting.

It is an additional object of the invention to provide a bicycle carrier that generates low drag when in use or when a bicycle is not affixed to it.

It is still another object of the invention to provide a configuration for carrying a plurality of bicycles on the rooftop by a plurality of bicycle carriers according to the invention.

In particular, it is an object of the present invention to provide a modular clamp for clamping a part of a bicycle to a predetermined structure, and that is further adapted for coupling another clamp thereto for clamping a part of another a bicycle to the structure, particularly in the vertically inverted configuration or in the vertically oriented configuration for each bicycle.

It is another object of the present invention to provide such a modular clamp, for clamping the front portion of one bicycle, and which is further adapted for coupling to a second clamp for clamping the front portion of a second bicycle, particularly in the vertically inverted configuration or in the vertically oriented configuration.

It is another object of the present invention to provide such a modular clamp, for clamping the front portion of one bicycle, and which is further adapted for coupling to a second clamp for clamping the rear portion of a second bicycle, particularly in the vertically inverted configuration or in the vertically oriented configuration.

It is also an object of the present invention to provide a universal clamp that may be used to clamp the front end or the rear end of a bicycle to a suitable location, particularly in the vertically inverted configuration or in the vertically oriented configuration.

It is also an object of the present invention to provide such a universal clamp capable of simultaneously clamping the front end of one bicycle and the rear end of another bicycle, in particular with respect to desired location.

It is also an object of the present invention to provide a system for carrying one or more bicycles, singly, or in clamped pairs, or in clamped clusters using a plurality of such modular clamps and/or universal clamps.

It is also an object of the present invention to provide a bicycle carrier system, in particular a modular bicycle carrier system, that minimises the number of gripping units that are required for compactly securing pairs or clusters of bicycles by enabling gripping units for clamping adjacent portions of adjacent bicycles to be coupled together to the same securing point on a support frame on the vehicle roof.

Other objects and advantages of the invention will become apparent as the description proceeds.

### Summary of the Invention

The present invention relates to a modular bicycle carrier system for releasably clamping at least one bicycle onto a predetermined structure, comprising:
at least one first gripping unit adapted for releasably gripping a first portion of a bicycle with respect to said structure;
at least one second gripping unit adapted for releasably gripping a second portion of a bicycle with respect to said structure,
wherein at least one of said first gripping unit or said second gripping unit is further adapted for coupling with at least one third gripping unit for releasably gripping a portion of another bicycle, wherein said third gripping unit is releasably secured with respect to said structure via said first securing means or via said second securing means, respectively.

Optionally, at least one of said first gripping unit or said second gripping unit or said third gripping unit is a "geometrical lock" type unit.

Preferably, the said structure comprises longitudinally spaced first and second transverse members comprising mounting means for mounting said transverse members onto an upper portion of a vehicle, typically the roof of a vehicle, and said at least first gripping unit and said second gripping unit are adapted for clamping at least one bicycle in vertically inverted configuration. The said at least one first gripping unit is mountable onto said first transverse member via said first securing means, and the said second gripping means is mountable onto said second transverse member via said second securing means.

Typically, the said first gripping unit is adapted for clamping a front portion of a bicycle, preferably a side of a bicycle handlebar, and said second gripping unit is adapted for clamping a rear portion of a bicycle, preferably the seat or the seat post of a bicycle.

The said first gripping unit may be adapted for coupling with at least one third gripping unit, and wherein said third gripping unit is adapted for clamping the front portion of another bicycle, such as a side of a bicycle handlebar. Additionally or alternatively, said first gripping unit may also be adapted for coupling with at least one third gripping unit, and wherein said third gripping unit is adapted for clamping the rear portion of another bicycle such as a seat of a bicycle.

In a first embodiment, the second gripping unit comprises an essentially horizontal support for the bicycle seat, said support being attached to the said second transverse member, and a belt with a buckle connected to said support for gripping and coupling the seat of the bicycle to said horizontal support. The said support is preferably padded. Alternatively, the second gripping unit comprises a gripping portion, and supporting means connecting the gripping portion to the said second transverse member. The supporting means are preferably flexible, for absorbing shocks resulting from the movement of the vehicle carrying the bicycle. The gripping portion preferably comprises a first clamping element having an essentially U-shaped cross-section for containing a portion of the perimeter of the bicycle seat post, a second clamping element for completing containment of substantially the whole perimeter of the seat post, and a handle for tensioning, securing and locking the said clamping elements around the seat post, or releasing the same; the supporting means preferably comprises at least one supporting bar connected at its first end to said second transverse member, and at its second end to the seat post gripping portion.

In the first embodiment, the said first gripping unit is adapted for coupling to said third gripping unit by means of a first portion of a longitudinal extension member, wherein said longitudinal extension member is mounted onto said first transverse member via suitable mounting means, said first gripping unit being secured to said first transverse bar by being mounted to said first portion of said longitudinal extension member in longitudinal spaced relationship with said first transverse member. Preferably, the longitudinal extension member comprises a second portion extending from said first transverse member in a direction away from said first gripping unit and wherein said third gripping unit is secured to said first transverse bar by being mounted to said second portion of said longitudinal extension member in longitudinal spaced relationship with said first transverse member. Preferably, the said first portion of said longitudinal extension member and said second portion of said longitudinal extension member are integral. The longitudinal extension member is mounted onto said first transverse member typically via suitable U-shaped retainer.

In the first embodiment, said first gripping unit comprises a vertical rod which is vertically attached at its first end to said first longitudinal extension member, a first supporting element for containing a portion of the perimeter of the bicycle handlebar, a third clamping element for completing containment of the whole perimeter of the handlebar, and a handle hingedly attached to the second end of the said rod, for tensioning, securing and locking the said supporting element with said third clamping element around the bicycle handlebar, or releasing the same. Alternatively, the said first gripping unit comprises a first supporting element attached to the said first longitudinal extension member, for containing a portion of the perimeter of the bicycle handlebar, a fourth clamping element for completing containment of the whole perimeter of the handlebar, and a handle hingedly attached to the said longitudinal extension member and to said fourth clamping element, for tensioning, securing and locking the said supporting element with said fourth clamping element around the bicycle handlebar, or releasing the same.

Optionally, the fourth clamping element of each first gripping unit is a belt having buckles at its two ends, the first buckle being connected to the said longitudinal extension member, and the second buckle connected to the handle, wherein turning the handle in one direction tensions the belt for securing and locking the said supporting element with said belt around the bicycle handlebar, and turning the handle in the other direction releases the tension of the belt, thereby allowing the dismounting of the handlebar from the first gripping unit. Alternatively, the fourth clamping element of each first gripping unit is a rectangular ring having two ends, the first end being connected to the said longitudinal extension member, and the second end being connected to the handle, wherein turning the handle in one direction tensions the ring for securing and locking the said supporting element with said ring around the bicycle handlebar, and turning the handle in the other direction releases the tension of the ring, thereby allowing the disassembling of the handlebar from the said first gripping unit.

In the first embodiment, the third gripping unit constitutes a second said first gripping unit.

In the second embodiment of the invention, said first gripping unit is joined to one of said first or second transverse members by means of a suitable U-shaped clamp adapted for releasably mounting said bicycle clamp to said transverse member. The said first gripping unit typically comprises a lower arm and an upper arm hingedly connected to said lower arm, at corresponding first ends thereof such as to enable said upper arm to be rotated from a closed position, wherein said first arm and said second arm are in substantially parallel arrangement, to an open position, wherein said upper arm and said lower arm comprise opposed recesses adapted to grippingly hold therebetween a portion of a handlebar of a bicycle when said upper arm and said lower arm are in said closed position, wherein in said open position corresponding free second ends of said upper arm and said lower arm are sufficiently spaced to enable said portion of said handlebar to be inserted into said recesses, said first gripping unit further comprising locking means for releasably locking said upper arm with respect to said lower arm. Preferably, the upper arm is hingedly connected to said lower arm at corresponding first ends thereof by means of a suitable hinge arrangement adapted for enabling said upper arm to be detached from said lower arm when said bicycle clamp is not in clamping mode. Alternatively, said closed position said free ends of said upper arm and said lower arm substantially overlap and comprise aligned apertures, said locking means comprising a fast removal pin insertable via a first end thereof through said aligned apertures, said pin comprising a stop at a second end thereof to limit extent of insertion of said through said apertures, said pin further comprising a longitudinal slit at said first end thereof and comprising a wedge-shaped stop associated with each half of the said pin divided by said slit, said slit and wedge-shaped stops adapted such as to enable said halves of said first end of the pin to be urged together to reduce the transverse cross-section thereof to less than that of said apertures and thus enable said first end of said pin to pass through said aligned apertures, said halves being resilient and springing back to enable the said wedge-shaped stops to lock said pin with respect to said aligned holes. Alternatively, said locking means comprises a U-shaped bar having a base joined to a pair of arms, said U-shaped bar being hingedly joined at the free arms thereof to the free end of said upper arm, said U-shaped bar adapted for reversibly swinging from a locking position in which the said base is superposed with respect to the underside of said free end of said lower bar, to an unlocked position wherein the base of the U is spaced from said free end of said lower arm, said base comprising a bolt arrangement capable of being received in a complementary socket disposed on the underside of said lower arm, for locking said U-shaped bar onto said lower arm. Alternatively, said locking means comprises a ratchet arrangement comprising a U-shaped bar hinged at the free arms thereof to the free end of said upper arm and having a stop on the base thereof complementary to any one of a plurality of teeth comprised on the free end of said lower arm, said U-shaped bar capable of swinging from a locking position in which the stop of the U-shaped bar is engaged with any one of said teeth of said lower bar, to an unlocked position wherein the base of the U is spaced from said free end of said lower arm. Optionally, said recesses are suitably padded.

In the second embodiment, said third gripping unit comprises a belt for releasably securing said rear portion of a bicycle, said belt having a suitable buckle arrangement for engaging and securely holding together the two ends of said belt, the said belt being securably coupled to said upper arm of said first gripping unit via a suitable notch comprised therein, and said belt further comprising suitable tensioning means capable of selectively tensioning said belt for securing and locking the said rear portion of a bicycle and for releasing the tension of the belt, thereby allowing the dismounting of the said rear portion of a bicycle from the second gripping unit. Alternatively, the said third gripping unit comprises a belt for releasably securing said rear portion of a bicycle, said belt having a suitable buckle arrangement for engaging and securely holding together the two ends of said belt, the said belt being securably attached to a top arm via a suitable notch therein, said third gripping unit being coupled to said first gripping unit whereby said top arm is hingedly attached to said upper arm of said first gripping unit, said belt further comprising suitable tensioning means capable of selectively tensioning said belt for securing and locking the said rear portion of a bicycle and for releasing the tension of the belt, thereby allowing the dismounting of the said rear portion of a bicycle from the third gripping unit. Optionally, said upper arm and said lower arm each comprise a substantially U-shaped transverse cross-section.

The modular bicycle carrier system according to the second embodiment may be used for releasably clamping at least one pair of bicycles comprising a first and a second bicycle to a predetermined structure, said system comprising for each said pair of bicycles at least two said first gripping units each coupled to a third gripping unit, wherein one said first gripping unit coupled to a third gripping unit is mounted onto said first transverse member and wherein the other said first gripping unit coupled to a third gripping unit is mounted onto said second transverse member, wherein the said first gripping units on said first and second transverse member respectively secure the front portions of said first and second bicycles, and wherein the said third gripping units on said second and first transverse members are the corresponding said second gripping units for respectively securing the rear portions of said first and second bicycles.

In the preferred embodiment, said first gripping unit comprises an upper articulated longitudinal member hingedly joined to a lower longitudinal member via a locking member, such as to enable the said upper longitudinal member to be selectively pivoted away from said lower longitudinal member to receive therebetween a side of handlebar of a bicycle, and towards said lower longitudinal member such as to enable a free end of said upper longitudinal member to releasably engage with a corresponding end of said lower longitudinal member, and wherein said locking member is adapted for locking together said upper longitudinal member with said lower longitudinal member when said free end of said upper longitudinal member is engaged with a corresponding end of said lower longitudinal member. Preferably, said articulated member comprises a hooked recess for engaging with a complementary pin comprised in said corresponding end of said lower longitudinal member.

Alternatively, the said first gripping unit according to the preferred embodiment comprises an upper flexible member hingedly joined to a lower longitudinal member via a locking member, such as to enable the said upper longitudinal member to be selectively pivoted away from said lower longitudinal member to receive therebetween a side of handlebar of a bicycle, and towards said lower longitudinal member such as to enable a free end of said upper flexible member to releasably engage with a corresponding end of said lower longitudinal member, and wherein said locking member is adapted for locking together said upper flexible member with said lower longitudinal member when said free end of said upper flexible member is engaged with a corresponding end of said lower longitudinal member, and preferably said flexible member comprises a pin for engaging with a complementary recess comprised in said corresponding end of said lower longitudinal member.

Typically, said first gripping unit is secured to one of said first or second transverse members by means of a suitable U-shaped retainer arrangement.

The said second gripping unit according to the preferred embodiment comprises a base member for seating thereon a seat of a bicycle, and further comprises a belt for releasably securing said rear portion of a bicycle, said belt having a suitable buckle arrangement for engaging and securely holding together the two ends of said belt, the said belt being securably coupled to said base member via a suitable notch comprised therein, and said belt further comprising suitable tensioning means capable of selectively tensioning said belt for securing and locking the said rear portion of a bicycle and for releasing the tension of the belt, thereby allowing the dismounting of the said rear portion of a bicycle from the second gripping unit. Preferably, said base member comprises a bottom bracket adapted for seating said second gripping unit on said second transverse member, and two dihedral wing elements joined to said bottom brackets via transversely spaced corresponding vertical flanges, and the said second gripping unit is secured to one of said first or second transverse members by means of a suitable U-shaped retainer arrangement. Preferably, said second gripping unit may be secured to one of said first or second transverse members within a range of longitudinal positions relative thereto by means of a plurality of slots adapted for cooperating with said U-shaped retainer.

The said first gripping unit preferably comprises fore and aft pins for enabling said first gripping unit to be coupled to a third gripping unit, said first gripping unit being adapted for coupling to said third gripping unit, said third gripping unit constituting a second gripping unit, wherein said third gripping unit further comprises fore and aft apertures for enabling said third gripping unit to be coupled to a said first gripping unit. In the preferred embodiment, a coupling bracket enables coupling of said first gripping unit to said third gripping unit. The coupling bracket is mountable onto said third gripping unit via said apertures, and is engageable onto said fore and aft pins of said first gripping unit. Preferably, said first gripping unit comprises a suitable notch at one longitudinal end thereof said belt being securably coupled to said first gripping unit instead of said base member for locking together said first gripping unit and said third gripping unit to the rear portion of a bicycle.

Optionally, in the preferred embodiment the lower longitudinal member of said first gripping unit comprises a longitudinal extension having securing means for securing said first gripping means to one of said first or said second transverse members in a longitudinally distanced relationship. Advantageously, said longitudinal extension enables said first gripping unit to be selectively mounted to one of said first or said second transverse member in either a forwardly or an rearwardly longitudinal spaced relationship, and the first gripping unit is secured to one of said first or second transverse members by means of a suitable U-shaped retainer arrangement. Accordingly, a modular bicycle carrier system is provided for releasably clamping at least one pair of bicycles comprising a first and a. second bicycle to a predetermined structure in staggered parallel arrangement, said system comprising at least two said first gripping units, wherein at least one said first gripping unit is mounted onto said first transverse member for respectively securing the front portion of said first bicycle in a forwardly spaced relationship, and wherein the other said at least one first gripping unit is mounted onto said first transverse member in a rearwardly spaced relationship for securing the front portion of said second bicycle, and further comprising corresponding said second gripping units for securing the rear portion of said first and said second bicycles to said second transverse member.

In another aspect, the first gripping unit according to the preferred embodiment is adapted for coupling to said third gripping unit by means of a longitudinal bridging member, wherein said longitudinal bridging member is mounted onto said first transverse member via suitable mounting means, said first gripping unit being joined to said first transverse bar at one longitudinal end thereof, and said third gripping unit being joined to said bridging member at the other end thereof, said third gripping unit constituting another such first gripping unit. Preferably, said longitudinal bridging member is integral with said longitudinal lower members of said first gripping unit and said third gripping unit, and the longitudinal bridging member is secured to one of said first or second transverse members by means of a suitable U-shaped retainer arrangement. Optionally, at least one of said third gripping unit or said first gripping unit is further adapted for coupling to a fourth gripping unit, and at least one of said first gripping unit or said third gripping unit comprises fore and aft pins for enabling said first gripping unit to be coupled to said fourth gripping unit. Thus, at least one of said first gripping unit or said third gripping unit is adapted for coupling to said fourth gripping unit, said fourth gripping unit constituting a second gripping unit adapted for securing the rear part of a bicycle, wherein said fourth gripping unit further comprises fore and aft apertures for enabling said fourth gripping unit to be coupled to a said first gripping unit. In such an arrangement, a coupling bracket is further comprised for coupling at least one of said first gripping unit or said third gripping unit to said fourth gripping unit, and the coupling bracket is mountable onto said fourth gripping unit via said apertures, and said coupling bracket being engageable onto said fore and aft pins of at least one of said first gripping unit or said third gripping unit. Preferably, at least one of said first gripping unit or said third gripping unit a suitable notch at one longitudinal end thereof said belt being securably coupled to said first gripping unit or said third gripping unit, respectively, instead of the base member of the second gripping unit for locking together said first gripping unit or said third gripping unit, respectively, and said fourth gripping unit to the rear portion of a bicycle.

### Brief Description of the Drawings

In the drawings:
Figure 1 shows a bicycle carried on the roof of a vehicle by a bicycle carrier of the invention;
Figure 2 shows how a plurality of bicycles can be carried by a plurality of bicycle carriers according to one aspect of the invention on the roof of a vehicle.
Figure 3 shows a longitudinal bar that comprises two handlebar-gripping units, for carrying two bicycles on a roof of a vehicle in staggered configuration;
Figure 4 shows a side view of the handlebar-gripping unit of Figure 3.
Figure 5 shows one of two identical gripping units for the bicycle handlebar, according to a first embodiment of the invention;
Figure 6 shows a side view of the handlebar-gripping unit of Figure 5;
Figure 7 shows a unit for gripping the bicycle seat post, according to one embodiment of the invention;
Figure 8 shows an upper view of the unit of Figure 7 for gripping the bicycle seat post.
Figure 9 shows a gripping unit for a seat of a bicycle, according to one embodiment of invention;
Figure 10 shows how a plurality of pairs of bicycles may be carried by a universal bicycle clamps according to an aspect of the invention on the roof of a vehicle.
Figure 11 shows in partially fragmented side view a preferred embodiment of the present invention, comprising a plurality of optional locking means for the first gripping unit thereof.
Figure 12 shows a front view of the embodiment of Figure 11.
Figure 13 shows one of the alternative locking means of Figure 11 along arrow A.
Figure 14 shows how a plurality of bicycles may be carried by a universal bicycle clamps according to another aspect of the invention on the roof of a vehicle.
Figure 15 shows in perspective view, a front gripping unit according to the preferred embodiment of the invention, in open mode.
Figure 16 shows in perspective view, a front gripping unit according to the preferred embodiment of the invention, closed mode.
Figure 17 shows in perspective view, a rear gripping unit according to the preferred embodiment of the invention.
Figure 18 shows in perspective view, a rear gripping unit according to the preferred embodiment of the invention, coupled to a coupling bracket.
Figure 19 shows in perspective view, the combination of Figure 18 coupled to the front gripping unit of Figure 16.
Figure 20 shows how a plurality of pairs of bicycles may be carried by using a carrier comprising fore- and aft-displaced front gripping units according to another aspect of the invention on the roof of a vehicle.
Figure 21 shows in perspective view, a fore-displaced front gripping unit of Figure 20.
Figure 22 shows in perspective view, an aft-displaced front gripping unit of Figure 20.
Figure 23 shows in perspective view, a double front gripping unit according to another aspect of the invention.
Figure 24 shows how a plurality of pairs of bicycles may be carried by using a carrier comprising fore- and aft-displaced front gripping units of Figures 21 and 22, and double front gripping units of Figure 23, according to another aspect of the invention, on the roof of a vehicle.

### Description

The present invention is defined by the claims, the contents of which are to be read as included within the disclosure of the specification, and will now be described by way of example with reference to the accompanying Figures.

The modular bicycle carrier system of the present invention is characterised in that it enables a plurality of bicycles to be releasably clamped or mounted onto a predetermined structure in pairs or clusters in a space-saving manner. The modular bicycle carrier system provides highly versatile and easily usable clamping or gripping units for clamping an upper portion such as the handle bar or seat of a bicycle to the structure. A bicycle may be clamped onto the structure via one or preferably two first gripping units for clamping the front portion of the bicycle, typically at either end of the handlebars, plus a second gripping unit for clamping the rear portion of the bicycle, typically the seat, seat post or seat stay. If a second bicycle is to be clamped to the structure, another three such clamps may be used in the same manner to secure it to the structure. However, the gripping units of the present invention are particularly advantageous when it is desired to clamp a number of bicycles onto a particular structure in that at least one of the two or three gripping units that are used to clamp the first bicycle is also adapted for coupling to another gripping unit that is used for clamping a portion of the second bicycle. Thus, one mounting point on the structure is used for securing portions of the two bicycles, and in fact such a system may be extended to a plurality of bicycles clamped together in a cluster or clusters, thereby enabling the bicycles to be mounted in a transversely compact manner, resulting in considerable space saving and enabling a greater number of bicycles to be carried by a carrier of a given transverse width.

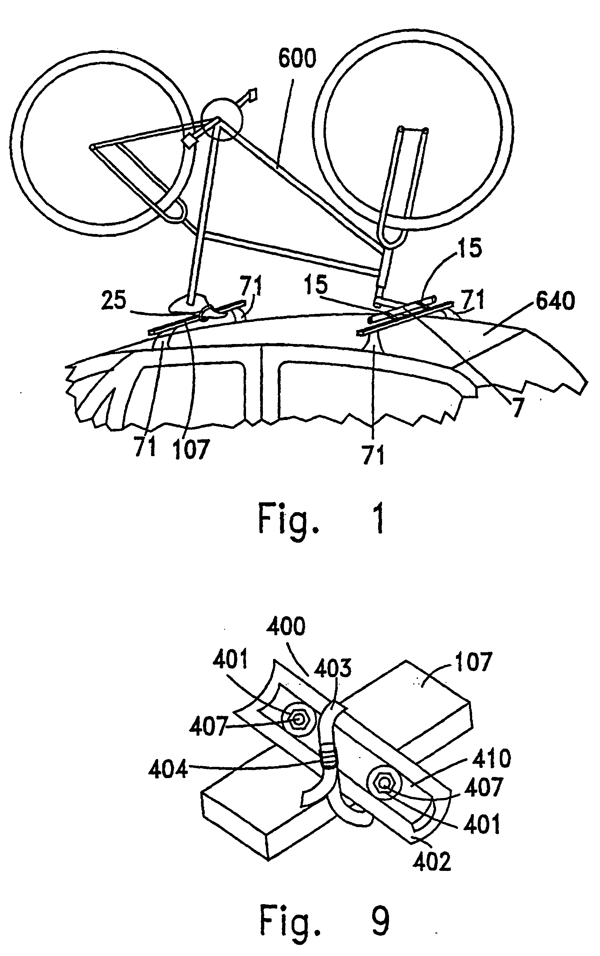

As has been mentioned hereinbefore, the modular bicycle carrier system of the present invention provides highly versatile and easily usable clamping or gripping units for clamping an upper portion such as the handle bar or seat of one bicycle to the structure. Such a structure may be used in a horizontal position and is thus particularly suitable for carrying a bicycle in upside-down or inverted configuration on the roof of a car for example, as illustrated in Figure 1, though such a configuration is also suitable for other upper surfaces such as the floor of an open trailer that is pulled by a motor vehicle, or the deck or floor of a platform of an articulated truck or lorry, or the cargo bay of van, lorry or trailer, or the like, or in fact in static situations such as the floor of a warehouse, for example. However, such a structure may be easily modified, still in the horizontal position, for storing or parking a bicycle in hanging configuration, i.e. in a non-inverted manner, from a ceiling or other overhead support. Alternatively, by having the predetermined structure in a vertical rather than horizontal position, a bicycle may be clamped onto a wall, pillar or the like in the vertically oriented configuration, i.e., with the front wheel and handlebars above the rear wheel and seat (or vice versa). Such a configuration is particularly suitable for clamping the bicycle onto a vertical surface such as the wall of a showroom or garage.

While the modular clamping system of the present invention is herein described with respect to a mounting structure on the roof of a vehicle for mounting one or more bicycles in inverted configuration, it also applies to similar mounting structures for mounting one or more bicycles in inverted configuration on any suitable horizontal upper surface of a vehicle such as the trunk or deck of a van or truck, *mutatis mutandis,* and to mounting structures for mounting one or more bicycles in hanging configuration onto a ceiling or other overhead support, *mutatis mutandis,* and to mounting structures for mounting one or more bicycles in vertical orientation, i.e. with one wheel above the other wheel onto a suitable vertical surface such as a pillar or wall, for example, *mutatis mutandis,* or indeed for mounting one or more bicycles at any desired angle to the horizontal, where the predetermined mounting structure is adapted for providing this angle, *mutatis mutandis*.

Referring to Figures 1, 2, 10, 14 and 20, the said predetermined structure typically comprises a pair of parallel transversely spaced bars (7) and (107) mounted onto the roof (640) of a vehicle via mounting brackets (71) at each end thereof. The mounting brackets (71) are typically mounted to the rain gutters of the vehicle, or where the vehicle lacks rain gutters to suitable mounting points on the roof, in a similar manner, for example, as currently known for mounting roof racks, ski carriers and the like.

In a first embodiment of the present invention, and referring to Figure 2, the modular bicycle carrier system, generally designated (10), enables several bicycles 600 to be simultaneously carried on a vehicle roof top (640), in a staggered longitudinal configuration. As shown, each bicycle handlebar (209) is gripped at its two ends by a pair of first gripping units (15) which are connected to longitudinal bar extensions (500), which are in turn attached to one of the transversal bars (7). The corresponding seat or seat post is attached to a second gripping unit (25) which is connected to the other transversal bar (107). In this embodiment, the first gripping units (15) of a bicycle are adapted for coupling to a third gripping unit, wherein the third gripping unit is in fact a first gripping unit used for gripping a front portion of an adjacent bicycle, the third gripping unit thus being adapted for gripping one end of the handle bar of the adjacent bicycle. The first gripping units (15) are adapted for coupling with the third gripping unit by being mounted onto the transverse bar (7) by means of longitudinal bar extension (500), which longitudinally displaces the clamping position of the first clamping unit with respect to transverse bar (7), but at the same time enables a third gripping unit to be coupled thereto, the third coupling unit being longitudinally displaced with respect to the bar (7) in the opposite direction. Thus, the first gripping means (15) of this embodiment comprises coupling means in the form of said extension (500), for coupling to a first gripping means (15) of an adjacent bicycle.

With such a staggered arrangement for the front gripping units (15), the rear gripping unit (25) may also be adapted to be mounted onto the rear transverse bar (107) in a correspondingly staggered manner in order to enable the rear portions of adjacent bicycles to be secured thereon. Of course the degree of fore- or aft- staggering of such rear gripping units (25) will depend on the wheelbase of the bicycles themselves. One such rear gripping unit (25) is described below with respect to figure 9

The said bicycle carrier system is modular, and thus in this embodiment a user may decide to mount two said first gripping means (15) to all inboard extensions (500), while only mounting one first gripping means (15) to the outboard extensions (500). Alternatively, some or all the extensions (500) may be used for mounting only a single first gripping unit (15). Furthermore, the first gripping units need not all be of the same type, but only adapted in pairs to be mutually coupled via corresponding said extension (500).

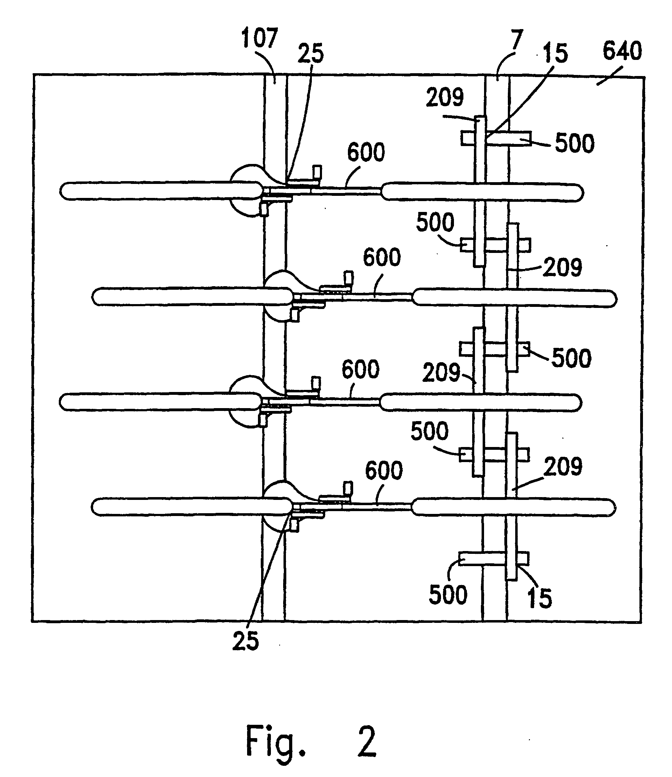

Referring to Figures 3 and 4, one form of said first gripping means (15) used in conjunction with extension (500) comprises a handlebar gripping unit (350), which is mountable at one longitudinal end of the extension (500). The handlebar gripping unit (350) comprises a support (314), preferably with padding (309), for seating the bicycle handlebar (209) in it. Handle (301) has a transversal hinge (328) for selectively placing it in one of the notches (392) or (393) of extension (500). The fourth clamping member (310), in this case a curved or flexible rectangular ring, is attached at its first end (370) to handle (301), and its second end (365) is selectively placed in one of the notches (362) or (372) of extension (500). The selection of the notches in which the hinge of the handle and the second end (365) of the ring (310) are placed depend on the diameter of the bicycle handlebar (209). In order to grip the bicycle handlebar (209), handle (301) is first turned clockwise (referring to the left-hand handlebar gripping unit (350) of Figure 3) until hinge (328) is released from the notch (392) or (393) in which it was placed, and then separated in a clockwise direction from bar 200 for allowing the placement of the handlebar on support (314). Then, when the handlebar (209) is placed, the hinge (328) of the handle (310) is placed back in one of the notches (392) or (393), and the turning counterclockwise of handle (301) into its locking state stretches the belt (310), thereby effecting a strong grip of the handlebar (209).

Alternatively, and referring to Figures 5 and 6, another embodiment of said first gripping means (15) used in conjunction with extension (500) comprises a different handlebar gripping unit (250), which is mountable at one longitudinal end of the extension (500). While not shown in Figure 5, a similar handlebar gripping unit (250), or alternatively a handlebar gripping unit (350) similar to those shown in Figures 3 and 4, may be mounted to the other longitudinal end of the extension (500). A U-shaped screw (260), and nuts (240) attach said extension (500) to the transversal roof top bar (7), shown in cross-section. The handlebar gripping unit (250) is attached to the extension (500) in two locations, by a transversal hinge (203), and by a vertical rod (206), which is in turn attached to the extension (500) by a rotating nut (248) and by two screws (247). Hinge (203) secures the third clamping member (210) of gripping unit (250) to the extension (500), but still allows it to rotate to some degree about hinge (203). A support (214), the internal surface of which is preferably padded by pad (229), spans the bottom surface of the handlebar perimeter. The third clamping member (210), which may be at least partially flexible, covers the upper portion of the handlebar (209) that is not covered by the internal surface of support (214). The third clamping member (210), further has a notch (not shown) at its end (219), for containing rod (206). The handle (201) is hingedly connected to rod (206) by hinge (221), and its surface (222) is eccentric with respect to hinge (221). Therefore, the handle (201) essentially has two positions. In order to grip a bicycle handlebar (209), the handle (201) is turned fully counterclockwise, thereby releasing any pressure from member (210), and allowing its separation from rod (206), and its turning clockwise. Then, handlebar (209) is placed on the support (214), the third clamping member (210) is turned counterclockwise, merging with rod 206 by the notch at end (219), and handle (201) is fully turned clockwise, actuating a pressure on the third clamping member (210), and locking the handlebar (209) by the gripping unit (250). The rod (206) is preferably threaded at its attachment with nut (248), for enabling the adjustment of the pressure that handle (201) acts on the third clamping member (210).

The handle gripping units (350) or (250) can have several variations in ways well known to those skilled in the art. For example, parts of it can be made of, or include, different materials such as plastic, metal, or leather. For example, the flexible ring (310) can be replaced by a leather belt with a buckle at its end (365). Those variations are within the scope of the invention.

In the first embodiment, each bicycle is also secured by means of a second gripping unit (25), which clamps the corresponding seat, seat stay or seat post of the bicycle to the other transversal bar (107). Of course, for any particular bicycle in which the front thereof is gripped by a first gripping unit mounted to the rear transverse bar (107), the rear portion of such a bicycle would be clamped by a second gripping unit mounted to the front transverse bar (7).

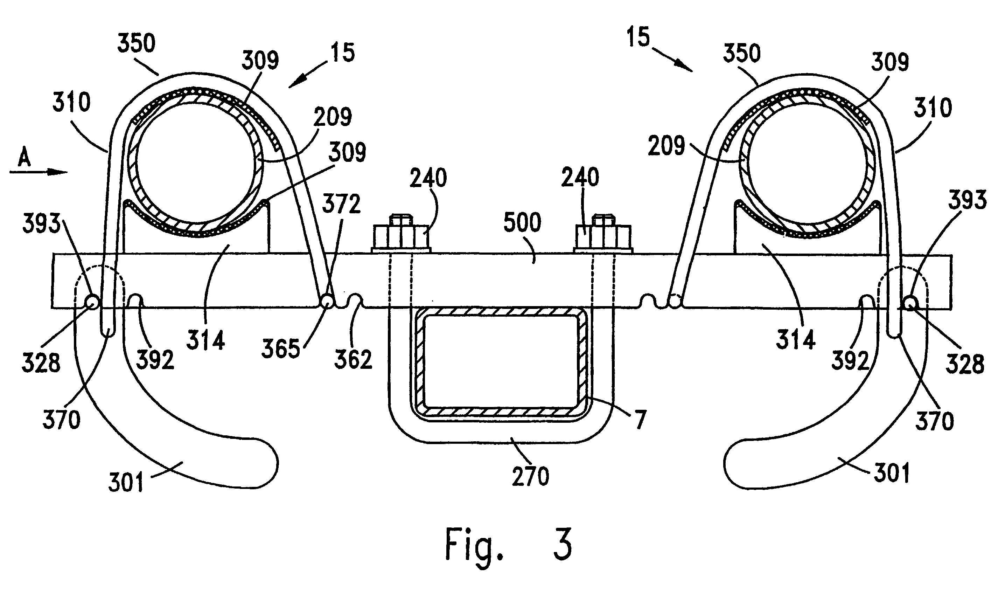

Referring to Figures 7 and 8, for example, said second gripping unit (25) comprises a seat post gripping unit (1). Said seat post gripping unit (1) is attached to a transversal bar (107) of the roof rack by two U-shaped screws and nuts (2) and (132) respectively, similar to the screw (260) which is shown in Figure 5, for example. The L-shaped members (4) are attached to the left supporting bar (3) and to the right supporting bar (103) by hinge pins (9), thereby providing an arrangement having some flexibility and the capability to absorb shocks, and the adaptation of the unit to different sizes of bicycles, when necessary. The gripping of the seat post (5) is provided by the gripping portion (10). First clamp (11), which has a generally U-shaped cross-section, is fixed to the left supporting bar (3) by a hinge pin (13) and to the right supporting bar (103) by hinge pin (113). It generally covers at least 50% of the perimeter of the seat post (5), preferably about 60-80%. Second clamp (17) is hingedly attached to the clamping handle (20), at the hinge location (24), and it closes the opening of the U-shaped cross-section of the first clamp (11), thereby covering essentially the rest of the perimeter of the post which is not covered by the first clamp (11). Preferably, at least one pad (36) is also provided, at the internal surface of either the first clamp, the second clamp, or both, for enabling a flexible grip of the seat post, and for providing shock absorbance, and possibly for eliminating damage to the paint of the seat post (5). Handle (20) has two states, an "inoperative state" in which the handle (20) is at least partially turned counterclockwise, and an "operative state" wherein the handle (20) is turned fully clockwise. As shown, the first clamp has a clasp (37). The mounting of the seat post (5) is carried out as follows: the second clamp (17) is separated from the clasp (37) of the first clamp, and is turned clockwise, thereby producing an opening through which the seat post is entered, gripped by the internal surface of the first clamp (11). Thereafter, the second clamp (17) is turned counterclockwise, placed beyond the clasp (37), as shown in Figure 8. Finally, the handle (20) is fully turned clockwise, resulting in a strong, "geometrical" locked grip of the seat post (5) by the term "geometrical" it is meant here that the device includes a part, such as a handle, that when rotated about a hinge in an eccentric location has two states, a "released" state and a "locked" state.

The seat post gripping unit (1) provides a strong grip of the bicycle seat post, with a flexibility, and shock absorbance, which is needed during the vehicle movement and the bicycle transportation. Furthermore, it also enables a fast and easy coupling and releasing of the bicycle.

The seat post gripping unit (1) can have several variations, other than the one shown in Figures 7 and 8, which are also within the scope of the invention. For example, it may have a "geometric" lock structure similar to the one used in the handlebar gripping unit of Figure 3 which is discussed hereinbefore in detail.

Alternatively, said second gripping unit (25) may comprise a seat gripping unit (400) for a seat or a seat post of a bicycle as shown in Figure 9, for example. The seat gripping unit (400) is attached by a U-shaped retainer (407) and corresponding nuts (401) to a transversal bar (107) of the predetermined structure. The unit further comprises a support (402) for the seat, on which the seat of the bicycle is placed, and a belt (403) with buckle (404). Preferably, a soft padding (410) covers the support (402), for providing a protection to the seat and some shock absorption. The padding (410) is preferably higher than the nuts (401) and the ends of the retainer (407), for preventing possible damage to the bicycle seat, and has two cylindrical holes for the said screw (407) and nuts (401). For gripping the seat of the bicycle, the seat is placed on the support (401) with padding (410), and is then gripped in a conventional manner by the (403), using the buckle (404) for tightening. The seat gripping unit (400) may be adapted for enabling the seat of the bicycle to be mounted onto said transverse bar (107) in a longitudinally staggered manner in a number of ways. For example, the seat may be mounted onto the seat gripping unit (400) longitudinally displaced from the centre thereof in a forwardly or rearwardly direction, within limits, while ensuring securement thereto. Alternatively, or additionally, the U-shaped retainer (407) may be secured to said seat gripping unit (400) via pairs of longitudinal slots or via a plurality of pairs of orifices, thereby enabling a degree of relative displacement between the two in a longitudinal direction.

According to the first embodiment, each of the bicycles carried on said carrier (10) may be clamped at the rear portion thereof by either a said seat post gripping unit (1) or a said seat gripping unit (400), though typically all the bicycles in the carrier (10) are clamped by the same type of said second gripping unit (25).

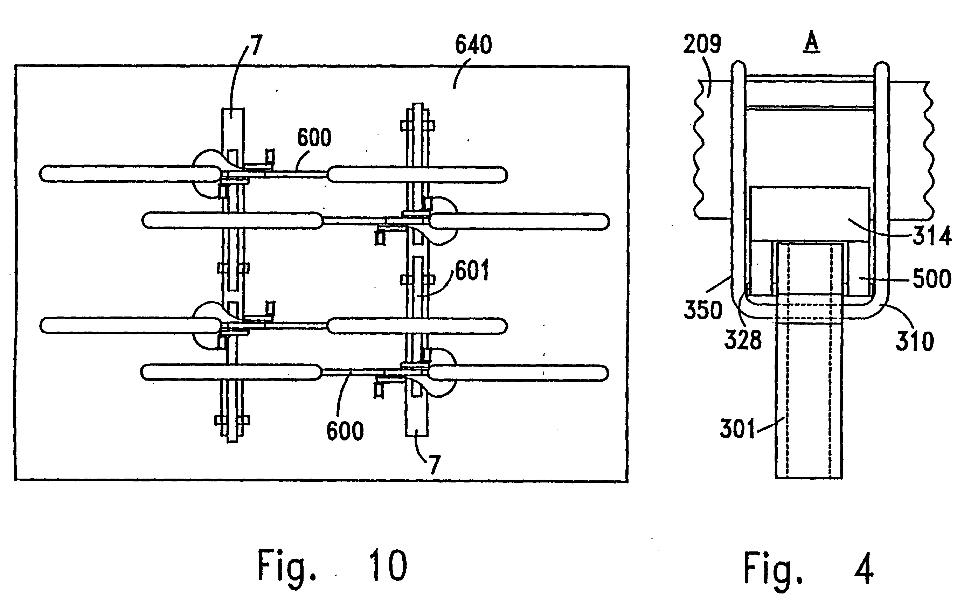

In a second embodiment of the present invention, illustrated in Figure 10, a plurality of bicycles may be carried on the roof of a vehicle, wherein pairs of bicycles may be coupled together and secured by said carrier (10) in staggered parallel back-to-front arrangement. As shown, each bicycle handlebar (209) may be gripped at its two ends by a pair of first gripping units (15) which are mounted to one of the transversal bars (7) or (107). The corresponding seat or seat post of each bicycle is secured by a second gripping unit (25) which is coupled to one of the first gripping units (15) that secures one end of the handlebar of the other bicycle of the pair. In this embodiment, at least one of the first gripping units (15) for gripping a portion of one bicycle is adapted for coupling to a third gripping unit, wherein the third gripping unit is in fact a second gripping unit (25) for gripping a portion of an adjacent bicycle, the third gripping unit being adapted for gripping the rear end, typically the seat or seat post or seat stay of the adjacent bicycle. The first gripping units (15) are adapted for coupling with the third gripping unit by having an upper element thereof constitute a part of the corresponding third gripping unit (i.e. the second gripping unit (25) for gripping the rear portion of the adjacent bicycle). Alternatively, the first gripping units (15) are adapted for coupling with the third gripping unit by having coupling means for coupling with the corresponding third gripping unit (i.e. the second gripping unit (25) for gripping the rear portion of the adjacent bicycle).

The said first gripping unit (15) may thus be coupled to a second gripping unit (25), either permanently, semi-permanently, or releasably, to provide a universal clamp that may be used to clamp the front portion and/or the rear portion of a bicycle, for securement to a position on a structure.

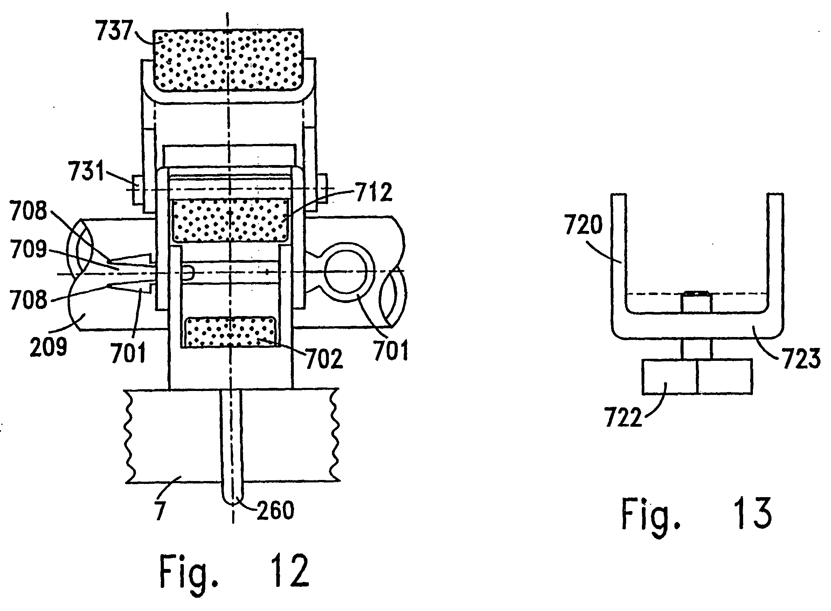

Thus, referring to the Figures, Figures 10 to 13 illustrate a second embodiment of the present invention in which a universal bicycle clamp, designated by the numeral (100), comprises:
a first griping unit (15) adapted for releasably gripping and securing a front portion of a bicycle; coupled to
a second griping unit (25) adapted for releasably gripping and securing a rear portion of a bicycle.

While such a universal clamp (100) may be used for clamping the front portion only or the rear portion only of a bicycle to said predetermined structure, the universal clamp (100) is typically adapted for simultaneously clamping a front portion of a first bicycle and a rear portion of a second bicycle. In such a case, the first griping unit (15) is adapted for releasably gripping and securing a front portion of the first bicycle; and the second griping unit (25) is adapted for releasably gripping and securing a rear portion of the second bicycle.

The said universal clamp (100), according to the second embodiment of the present invention, is particularly adapted for clamping the front portion of a bicycle, such as one side of the handlebar (209), and/or the rear portion of another bicycle, such as the seat, seat stay or any other rear portion of the bicycle.

Thus, referring to Figures 10 to 13, the said universal clamp (100) may be clamped on an upper surface of a vehicle, in particular a roof top (640) of said vehicle, via either one of said transverse bars (7) or (107), which is in turn mounted onto the vehicle, as hereinbefore described. The universal clamp (100) is suitably mounted to the transverse bar (7), say, by means of any suitable fastening mechanism, particularly of the quick-release type, and in the preferred embodiment the fastening mechanism comprises a U-shaped retainer (260) having threaded free ends onto which nuts (240) may be screwed to secure the bar (7) with respect to the universal clamp (100).

The first gripping unit (15) comprises a front gripping unit (120) comprising a lower arm (700), typically having a U-shaped transverse section, and the retainer (260) is typically secured thereto. An upper arm (710), also typically having a U-shaped transverse section, is hingedly connected to said lower arm (700) by a hinge (711) cooperating with a notch (705) at corresponding first ends of the upper and lower arms. The hinge (711) and notch (705) enable the upper arm (710) to be rotated towards and away from the lower arm (700), respectively defining a closed position, wherein the upper arm (710) and the lower arm (700) are in substantially parallel arrangement, and an open position, in which the front portion of a bicycle, typically a side of the handlebar, may be inserted or removed from the first gripping unit. Optionally, the said hinge (711) and notch (705) are adapted for enabling the said upper arm (710) and said lower arm (70)0 to be detached one from the other when desired, when the said universal clamp (100) is not in clamping mode, i.e., is not clamping a bicycle. This feature enables the drag of a vehicle incorporating such a clamp (100) to be further reduced when not carrying a bicycle. The upper arm (710) and the lower arm (700) comprise opposed recesses, (752) and (742), respectively, adapted to grippingly hold therebetween a portion of a handlebar (209) of a bicycle when said upper arm (710) and said lower arm (700) are in the closed position. The recesses (752), (742) typically comprise suitable pads, (712), (702) respectively, to prevent damage to the handlebar and to dampen vibrations.

The front gripping unit (120) further comprising locking means for releasably locking said upper arm (710) with respect to said lower arm (700).

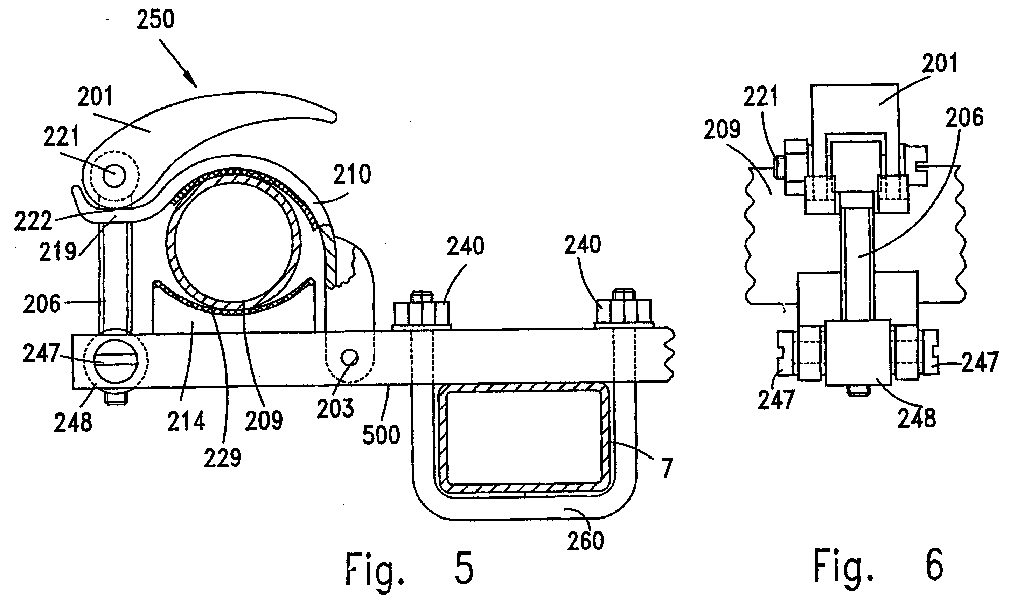

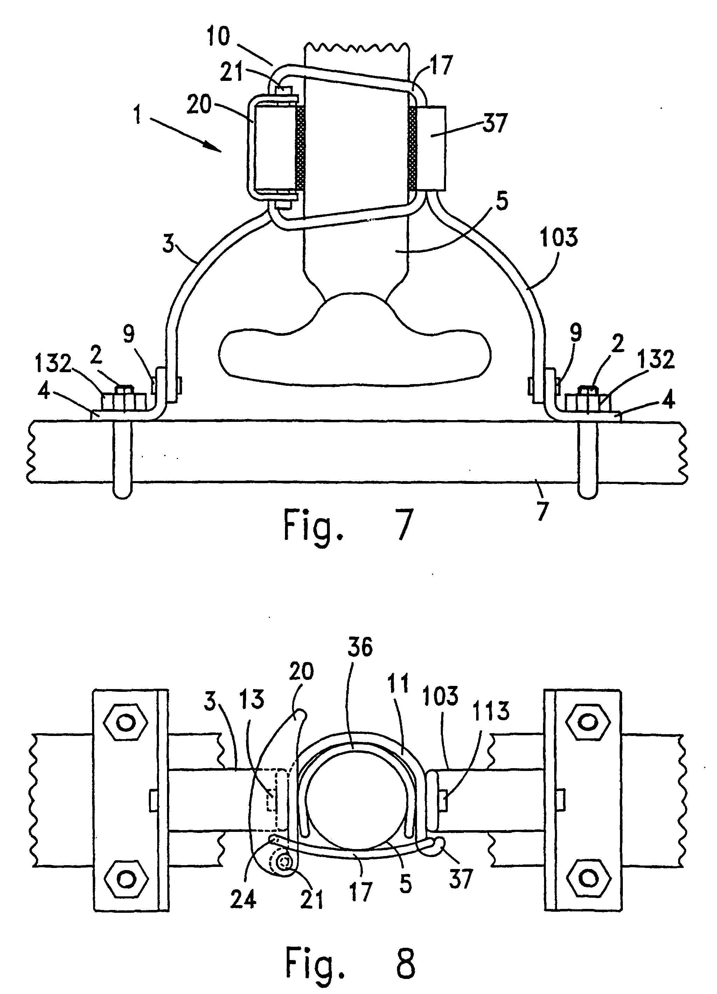

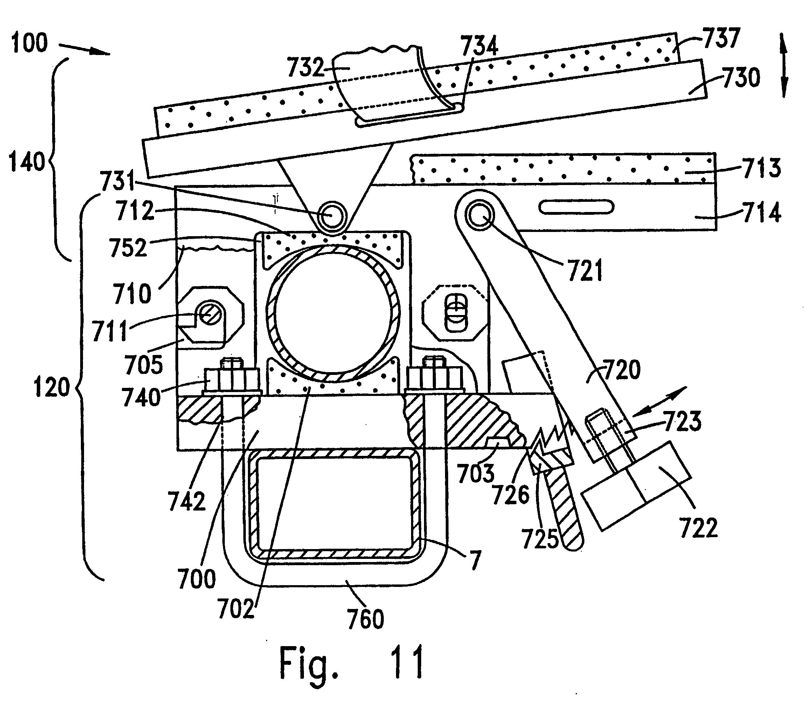

While Figures 11 to 13 show a number of different locking means simultaneously for locking the upper arm (710) and lower arm (700) together, in practice only one such locking means, or indeed one of any number of suitable locking means including those described with reference to Figures 1 to 9, need be used, *mutatis mutandis*.

Referring then to Figures 11 to 13, in one embodiment of the locking means, the free ends of the upper arm (710) and the lower arm (700) substantially overlap and comprise aligned apertures. A fast removal pin (701) is insertable via a first end thereof through the aligned apertures, to hold the free ends of the arms together. The pin (701) comprises a stop at a second end thereof to limit extent of insertion of said through the apertures, and the pin (701) further comprises a longitudinal slit (709) at said first end thereof and comprising a wedge-shaped stop (708) associated with each half of the said pin (701) divided by the slit, (709). This arrangement enables the halves of said first end of the pin (701) to be urged together to reduce the transverse cross-section of the wedges (708) to less than that of the aligned apertures and thus enable first end of the pin (701) to pass through the aligned apertures. The halves of the pin end are resilient and spring back to enable the said wedge-shaped stops 708 to lock said pin (701) with respect to the aligned holes.

Alternatively, the locking means may comprise a U-shaped bar (720) having a base joined to a pair of arms, said U-shaped bar being hingedly joined at the free arms thereof by a hinge (721) to the free end of said upper arm (710). The said U-shaped bar (720) is adapted for reversibly swinging from a locking position in which the said base (723) of the U-shaped bar (720) is in juxtaposition with or superposed with respect to the underside of said free end of said lower bar (700), to an unlocked position wherein the base (723) of the U-shaped bar (720) is spaced from said free end of said lower arm (720). The base (723) comprises a bolt arrangement (722) capable of being received in a complementary socket (703) disposed on the underside of said lower arm for locking said U-shaped bar onto said lower arm.

Alternatively, the locking means comprises a ratchet arrangement comprising a U-shaped clamp (725), hinged at the free arms thereof to the free end of said upper arm (710). The base of the U-shape clamp (725) in this embodiment comprises a detent, pawl or suitable stop (726) complementary to any one of a plurality of teeth or notches (704) comprised on the free end of said lower arm (700). The U-shaped clamp (725) is capable of swinging from a locking position in which the stop (726) of the U-shaped bar is engaged with any one of said teeth (704) of said lower bar (700), to an unlocked position wherein the base (726) of the U-shaped clamp (725) is spaced from said free end of said lower arm (700). To release the said U-shaped clamp (725) from the notches (704), the upper arm (710) is brought towards the lower arm (700) against the elastic resistance of the pads (712), (702), when a side of the handle bar (209) is clamped therebetween.

In the second embodiment, the second gripping unit (25) may be coupled to the first gripping unit (15) in a permanent, semi-permanent or releasable manner. Typically, the second gripping unit is coupled to the first gripping unit, even if only one of the two is to be used at any one time.

The second gripping unit (25) comprises rear gripping means (140) for clamping the rear portion of a bicycle to said predetermined structure via said first gripping means (15) coupled thereto. The rear gripping means (140) comprises a belt (732) having a suitable buckle arrangement comprising buckles (not shown) at its two ends or at only one end thereof, for securing the rear portion of a bicycle onto the upper arm (710). Thus, the front gripping unit (120) is adapted for coupling to the rear gripping unit (140) in that the upper arm (710) of the front gripping unit (120) is also part of the rear gripping unit (140) itself, and in that it comprises, means for securing the belt (732) thereto, for example, a notch (714) as described hereinbelow. The buckle arrangement is adapted for engaging and securely holding together the two ends of said belt, the said belt (732) being securably attached to said upper arm (710) of said front gripping unit (120), for example by threading the same through notch (714) in upper arm (710). The said buckle arrangement comprise suitable tensioning means capable of selectively tensioning said belt for securing and locking the said rear portion of a bicycle, and for releasing the tension of the belt, thereby allowing the dismounting of the said rear portion of a bicycle from the second gripping unit. Typically, the belt (732) secures the seat of the bicycle, and the upper arm (710) further comprises a soft pad (713) for seating the bicycle seat thereupon.

Alternatively, said rear gripping unit (140) is independent of the front gripping unit (120), and comprises a belt (732) having a similar buckle arrangement at its two ends(not shown), the said belt being securably attached to a top arm (730). The front gripping unit (120) is thus adapted for coupling to the rear gripping unit (140) in that the former enables the top arm (730) to be hingedly attached by means of hinge (731) to said upper arm (710) of said front gripping unit (120). In such a case, the belt (732) is secured to the top arm (730) for example by threading the same through notch (734) in top arm (730). As before, the buckle arrangement is adapted for engaging and securely holding together the two ends of said belt, and comprises suitable tensioning means capable of selectively tensioning said belt for securing and locking the said rear portion of a bicycle and for releasing the tension of the belt, thereby allowing the dismounting of the said rear portion of a bicycle from the second gripping unit. Preferably, the said top arm (730) comprises pad (737), and the rear end of a bicycle, preferably the seat thereof, is held securely between the pad (737) and the belt (732). Optionally, the top bar (730) may be rotated over a limited arc about hinge (731) in order to compensate for the range of possible seat-to-seat post angles.

Thus, in the second embodiment, three said universal clamps (100) may be used for clamping each bicycle onto the desired location, in which one said universal clamp (100) clamps the rear portion of said bicycle via said corresponding second gripping unit (140), and wherein the remaining two said universal clamps (100) clamp the front portion of the said bicycle via said corresponding first gripping units (120) thereof. It is also possible to clamp a bicycle with only two said universal clamps (100), one for clamping at the rear portion of the bicycle via said corresponding second gripping unit (140), and wherein the remaining said universal clamps (100) clamps only one side of the handlebar (209), for example, via said corresponding first gripping units (120) thereof.

The second embodiment may also be used for simultaneously clamping a first bicycle and a second bicycle onto any suitable surface, in particular an upper surface of a vehicle, wherein four said universal clamps (100) are used for clamping each pair of bicycles onto the desired structure: a first said universal clamp (100) simultaneously clamps a front portion of said first bicycle and a rear portion of said second bicycle, wherein a second said universal clamp (100) simultaneously clamps a rear portion of said first bicycle to a front portion of said second bicycle, and wherein a third and a fourth said universal clamps (100) respectively clamp the front portion of said first bicycle and the front portion of the said second bicycle. In fact, the last two said universal clamps (100) are optional, and only the first two universal clamps are strictly required to clamp a pair of bicycles together onto said structure.

The universality of the universal clamp (100) increases simplicity of installation and use, and substantially simplifies the logistics for supplying such universal clamps (100). Another major advantage of the universal clamp (100) is that by simply adding a fourth universal clamp (100), a second bicycle may be clamped as a pair together with the first bicycle and secured onto the upper surface of a vehicle, as illustrated in Figure 10. This is accomplished by clamping the rear end of one bicycle and the front end of the other bicycle with one universal clamp (100), and vice versa for a second universal clamp (100), the remaining two universal clamps (100) being used to clamp the free sides of the handlebars of the two bicycles. Further, only two such clamps are strictly necessary for clamping a single bicycle onto the structure (i.c., by one side of the handle bars and by the seat thereof, for example), and in fact the same two universal clamps may be used for clamping a second bicycle to the first bicycle and to the structure! The economic advantages are self evident in such a system, and further provided a more compact configuration for each pair of bicycles, reducing drag and increasing mechanical integrity of the assembly. Of course, when the universal clamps (100) are not in use, the upper arm (710), including the second gripping means (140), may be detached from the lower arm (700), further reducing drag when used on a vehicle.

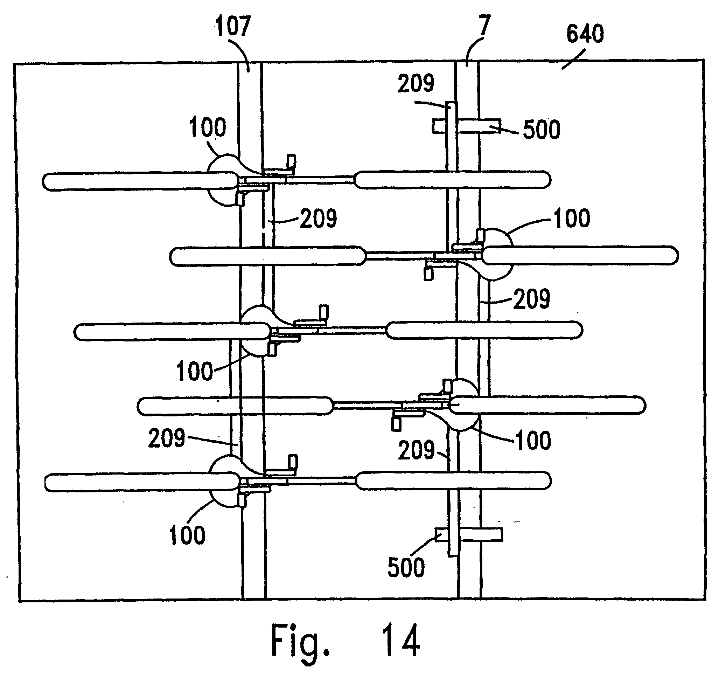

Optionally, and as illustrated in Figure 14, the second embodiment may be modified for enabling a plurality of bicycles to be clamped together in a cluster, rather than just in pairs, and secured to a structure on the roof top of a vehicle, providing a more compact packing of the bicycles. Thus, the first gripping unit (120) of the universal clamp (100) is mounted onto a said longitudinal extension (500) in a manner similar to that described herein for the first embodiment of the invention, *mutatis mutandis,* rather than directly to the transverse bars (7) or (107). This enables the universal clamp (100) to be coupled to another front gripping unit (120) of an adjacent universal clamp (100) (or indeed to a front gripping unit (250) or (350) of the first embodiment), and thus the front gripping unit (120) is effectively coupled to both a rear gripping unit (140) and to another front gripping unit (120), enabling three bicycles to be secured to the same location on the predetermined structure, i.e., the transverse bar (7) or (107).

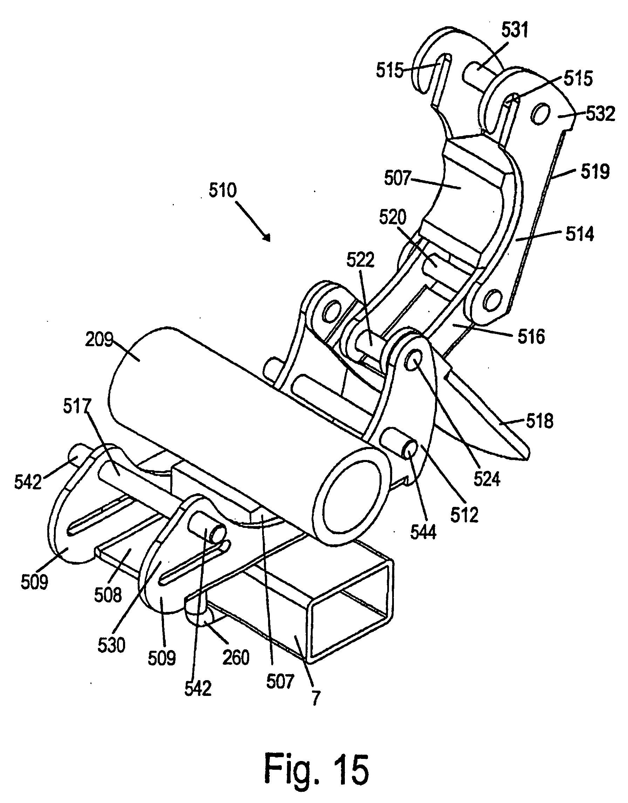

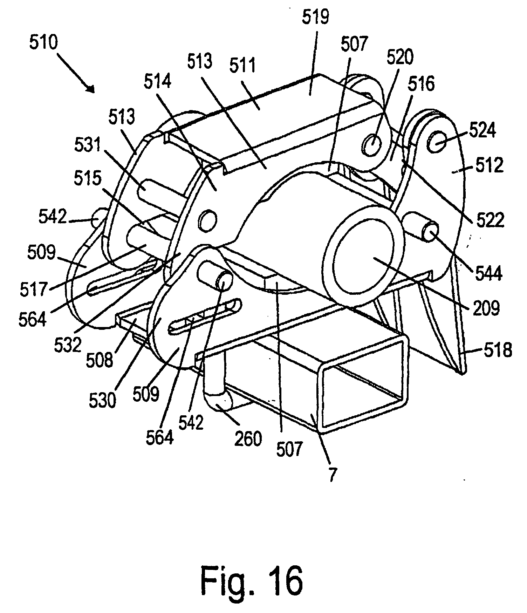

A preferred embodiment of the present invention is illustrated in Figures 15 to 23. In this embodiment, and referring particularly to Figures 15 and 16, a first gripping unit (15) comprises a front gripping unit (510) for clamping one end of a handle bar (209) and securing it to the structure, in particular said transverse bar (7) or (107). Thus, front gripping unit (510) comprises a lower longitudinal member (512) adapted for mounting onto said structure, and thus preferably comprises a U-shaped retainer (260) for mounting onto transverse bar (7) or (107) via bolts (240), in a similar manner as hereinbefore described for the first and second embodiments, *mutatis mutandis*. The lower member (512) has a substantially U-shaped transverse cross-section, and thus comprises a horizontal bracket (508) integrally joined to two vertical flanges (509). The horizontal bracket (508) is seatable onto said transverse bars (7) or (107), and comprises a pair of apertures (not shown) for enabling the free ends of the U-shaped retainer (260) to be passed therethough so as to screw the bolts (240) thereto and thus secure the front gripping unit (510) to the transverse bar (7) or (107). The front gripping unit (510) further comprises an articulated upper longitudinal member (514), also typically comprising a U-shaped transverse profile. The articulated upper longitudinal member (514) comprises an upper clamping member (519) comprising an upper bracket (511) integrally joined to two downwardly depending vertical flanges (513), hingedly joined at a first longitudinal end thereof to an intermediate member (516) via pin (520), which is in turn hingedly joined at the other end thereof to a locking lever (518) via pin (522). The locking lever (518) is itself hingedly joined to a first end of the lower member (512) via pins (524).

The second end (532) of said upper longitudinal member (514) comprises a pair of hook-shaped recesses (515) for hooking onto pin (517) comprised at the second longitudinal end (530) of the lower member (512). The said articulated upper longitudinal member (514), and locking member (518) are thus rotatable as a unit about pins (524) with respect to the lower member (512), enabling the second end (532) of the upper member (514) to be selectively brought into proximity with and distanced from the second end (530) of the lower member (512). Moreover the relative rotations that are possible between the clamping member (519) and the intermediate member (516) enable the articulated upper longitudinal member (514) to overshoot the second end (530) of the lower member (512) such as to enable the hook-like recesses (515) to be engaged onto the pin (517), after which a downwards rotation of the locking lever (518) about pins (524) locks the recesses (515) with respect to the pin (517).

The upper longitudinal member (514), including said pin (520) and the lower member (512) are waisted or recessed in their facing center sections so as to enable a handlebar (209) to be accommodated between them when locked together as shown in Figure 16. Preferably, the said upper member (514) and the lower member (512) comprise cushioning pads (507) for protecting the handle bar (209) against damage from contact with the upper flanges (513) and lower flanges (509), and also help to dampen vibration. Optionally, a strengthening strut (531) may be joined to flanges (513).

Optionally, upper longitudinal member (514) including said upper clamping member (519), said pin (520) and said intermediate member (516) may be a unitary flexible member made from a flexible material such as a suitable plastic material, for example, that in the unstressed state assumes a shape similar to that of upper clamping member (519) and said intermediate member (516) when in the closed position shown in Figure 16. The flexibility of such an upper member (514) is such as to enable it (in the open position shown in Figure 15, for example) to overshoot the second end (530) of the lower member (512) and to engage the same, either in a manner similar to that described above or with the added difference that the pin (517) is comprised in the upper flexible member, and the recesses (515) are comprised in the lower member (512), *mutatis mutandis*. Alternatively the upper and lower members may be engaged using a suitable quick release engagement mechanism, and such a suitable quick-release engagement mechanism is also preferably adjustable, thereby taking account of a wide range of handlebar diameters, for example.

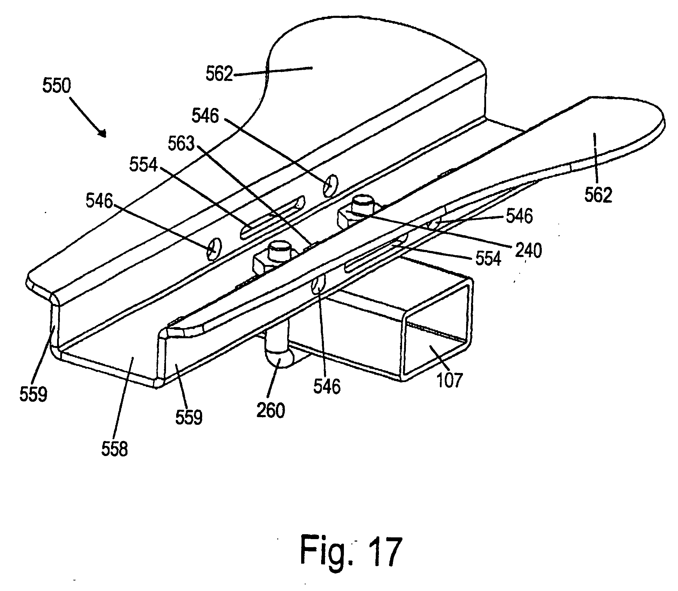

In the preferred embodiment, and referring to Figure 17 in particular, the second gripping unit (25) comprises a rear gripping unit (550) for mounting and securing the seat of a bicycle thereto. The rear gripping unit (550) comprises a horizontal bracket (558) integrally joined to two vertical flanges (559). The horizontal bracket (558) is seatable onto said transverse bars (7) or (107), and comprises one pair or a number of pairs of apertures, (not shown) for enabling the free ends of a U-shaped retainer (260) to be passed therethough so as to enable screwing of the bolts (240) thereto and thus secure the rear gripping unit (550) to the transverse bar (107) or (7). Preferably, a number of longitudinal slots (563) are provided in lieu of the apertures on said horizontal bracket (558), thereby enabling the relative longitudinal position of the rear gripping unit (550) with respect to the transverse bar (107) or (7) onto which it is mounted to be adjusted, to take account of the range of wheelbase dimensions of different bicycles. A pair of wings (562) are dihedrally joined, preferably integrally, to the vertical flanges (559), the wings (562) being suitable shaped for providing a seat for the bicycle seat to rest on. Preferably, said wings (562) comprise cushioning pads (not shown) for protecting the bicycle seat and for dampening vibration. The rear gripping unit (550) further comprises a belt (not shown) having a suitable buckle arrangement comprising buckles (not shown) at its two ends or at only one end thereof, for securing the rear portion of a bicycle onto the rear gripping unit (550). The buckle arrangement is adapted for engaging and securely holding together the two ends of said belt, the said belt being securably attached to said vertical flanges (559) of said rear gripping unit (550), for example by threading the belt through notches (554) formed in said vertical flanges (559). The said buckle arrangement preferably comprises suitable tensioning means capable of selectively tensioning said belt for securing and locking the said rear portion of a bicycle, and for releasing the tension of the belt, thereby allowing the dismounting of the said rear portion of a bicycle from the second gripping unit (550). Typically, the belt secures the seat of the bicycle.

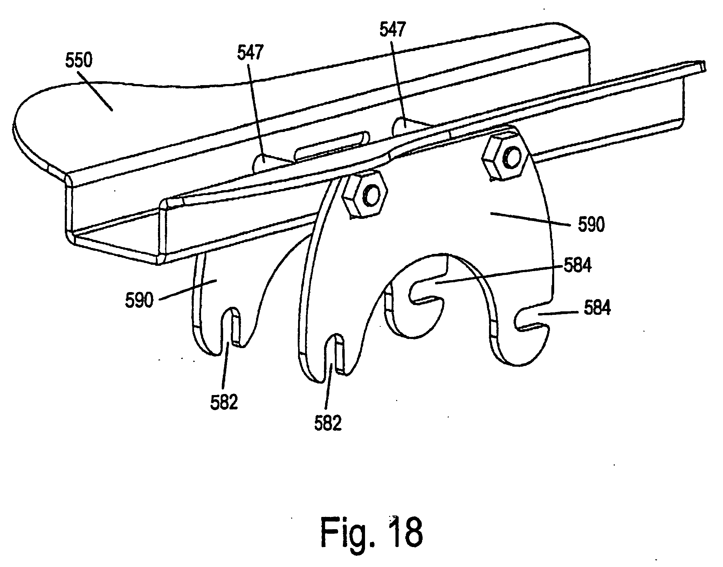

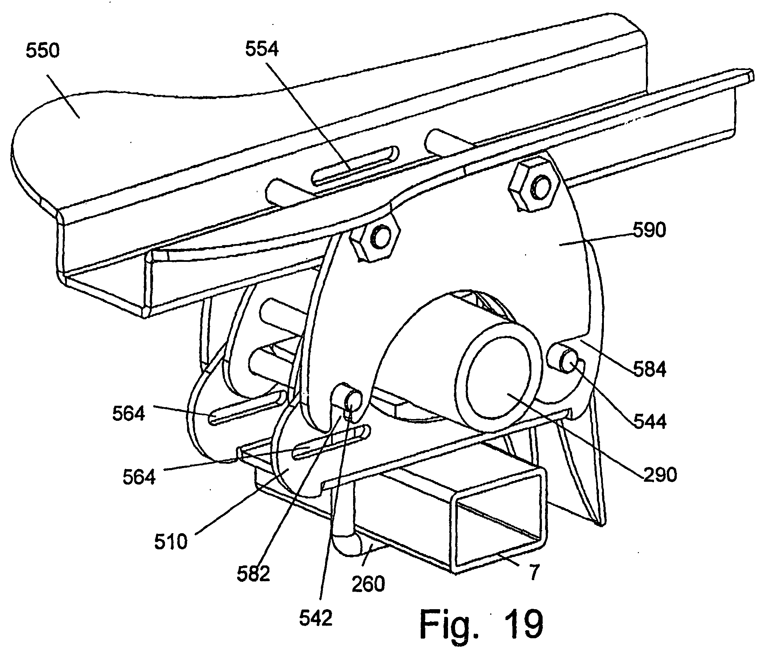

In the preferred embodiment, and referring in particular to Figures 18 and 19, the said front gripping unit (510) may be coupled to a rear gripping unit (550) by means of a coupling bracket (590) In the preferred embodiment the said coupling bracket (590) is in the form of a pair of vertical flanges which may be releasably bolted to the said rear gripping unit (550), enabling the latter to be releasably engaged onto a front gripping unit (510), in which case such a rear gripping unit (550) would of course dispense with the U-shaped retainer (240), since it is not to be mounted directly onto transverse bar (7) or (107). The coupling bracket (590) comprises vertically disposed slots (582) at a first end thereof, and horizontally disposed slots at a second end thereof (584).

The said rear gripping unit (550) is thus adapted for coupling with said front gripping unit (510) in that it comprises apertures (546) on said vertical flanges (559) for enabling bolts (547) to pass therethrough and through the coupling bracket (590) enabling the latter to be securely and releasably locked with respect to the rear gripping unit (550). Alternatively, the coupling brackets (590) may be permanently or semi permanently joined to the rear gripping unit (550), say by welding thereto, for example, in which case such a rear gripping unit-coupling unit combination would normally be used solely coupled with the front gripping unit (510), rather than on its own for only coupling a rear portion of a bicycle onto the transverse bars (7) or (107).

Nonetheless, even such a permanently or semi permanently joined rear gripping unit-coupling bracket combination can also be modified to be mounted directly onto the said transverse bars (7) or (107) by using a longer U-shaped retainer (260), for example, so that the coupling bracket (590) vertically clears the corresponding said transverse bars (7) or (107).

Similarly, and referring to Figures 15, 16 and 19, the said front gripping unit (510) is adapted for coupling with said rear gripping unit (550) in that it comprises fore and aft engaging pins (542), (544) for engaging with said coupling bracket (590) via complementary slots (582), (584), respectively.

Thus, in order to couple a said rear gripping unit (550) to a said front gripping unit (510), the coupling bracket (590) is first mounted onto the rear gripping unit (550) as hereinbefore described. Then, holding the rear gripping unit (550) in orthogonal relationship to the front gripping unit (510), the former is mounted onto the latter by engaging the aft engaging pins (544) into the corresponding complementary slots (584) on said coupling bracket (590), which is then pivoted by about 90° to bring into engagement the fore engaging pins (542) with the slots (582). Optionally, the coupling bracket (590) may be secured and locked in place on the front gripping unit (510) by means of bolts, for example, which are screwable onto the ends of the engaging pins (542) and (544) that protrude from the coupling bracket (590). In the preferred embodiment, however, the rear gripping unit (550) is securely locked onto the front gripping unit (510) indirectly by means of the belt and buckle arrangement that is used for securing the rear portion of the bicycle. Thus, the front gripping unit (510) is also adapted for coupling with the rear gripping unit (550) in that it comprises slots (564) on the vertical flanges (509), similar to said slots (554) on the rear gripping unit (550). In this arrangement, the belt is securably attached to said vertical flanges (509) of said front gripping unit (510), for example by threading the same through notches (564) in said vertical flanges (509). Thus, the belt and buckle arrangement is used to secure the rear part of a bicycle to the rear gripping unit-coupling bracket-front gripping unit combination, in a similar manner to that hereinbefore described with reference to the rear gripping unit (550) only, *mutatis mutandis*. This arrangement not only secures the bicycle rear portion onto the rear gripping unit (550), but also results in the rear gripping unit (550) being locked with respect to the front gripping unit (510) via the coupling bracket (590).

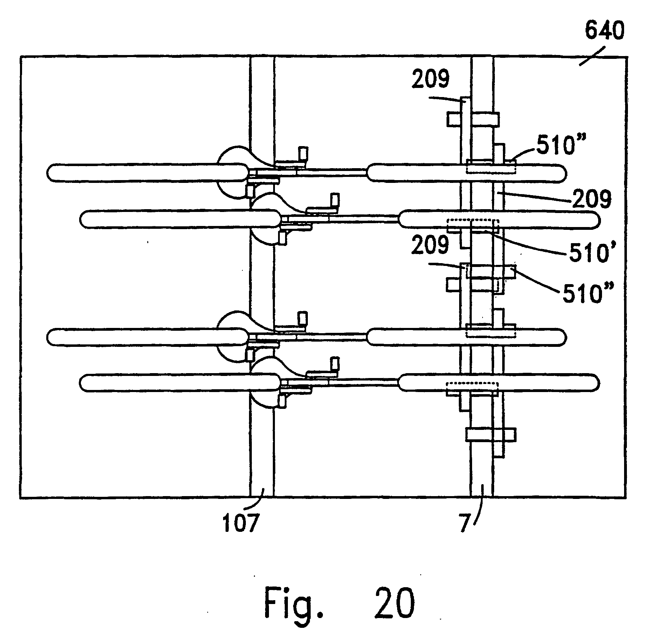

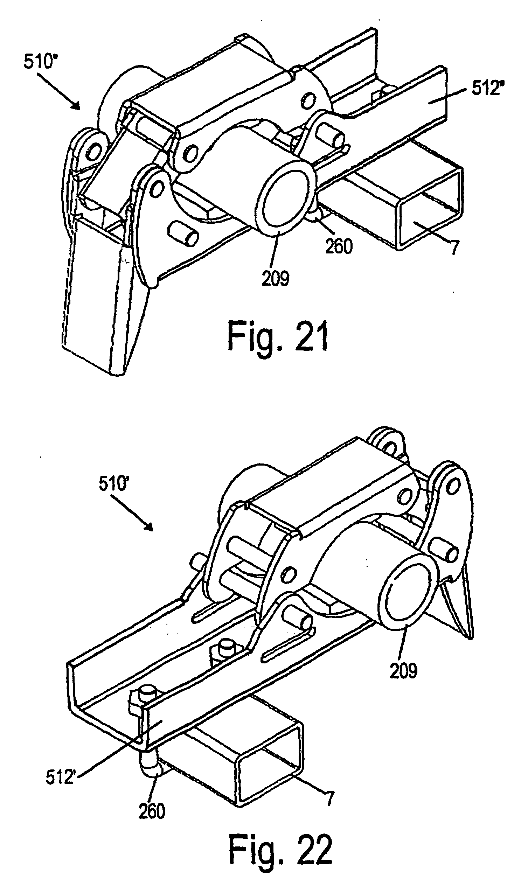

Optionally, and/or alternatively, the said front gripping units (510) may be adapted to be secured onto the said transverse bars (7) or (107) in a longitudinally staggered configuration. Thus, with reference to Figures 20, 21 and 22, fore- and aft-displaced front gripping units, (510") and (510'), respectively, are similar to the said front gripping units (510) as hereinbefore described, except that the said lower longitudinal member (512) is replaced by corresponding extended lower longitudinal members (512") and (512'), respectively, *mutatis mutandis,* which comprise longitudinal extensions. In the forwardly displaced front gripping unit (510") shown in Figure 21, the lower longitudinal member (512") extends from the said second end (530) thereof in an aft direction, and the rearmost portion thereof is adapted for mounting onto said structure, and thus preferably comprises a U-shaped retainer (260) for mounting onto transverse bar (7), say, via bolts (240), in a similar manner as hereinbefore described for the preferred embodiment, *mutatis mutandis*. Similarly, in the rearwardly displaced front gripping unit (510') shown in Figure 22, the lower longitudinal member (512') extends in an forward direction from the said second end (530) thereof, and the foremost portion thereof is adapted for mounting onto said structure, and thus preferably comprises a U-shaped retainer (260) for mounting onto transverse bar (7), say, via bolts (240), in a similar manner as hereinbefore described for the preferred embodiment, *mutatis mutandis*. In fact, the said fore- and aft-displaced front gripping units, (510") and (510') may be in fact identical, and differing only in the direction in which they are actually mounted onto the said transverse bars (7) or (107). The said fore- and aft-displaced front gripping units, (510") and (510'), may be mounted onto one of said transverse bars, say (7), in spaced pairs, enabling pairs of bicycles to be separately secured onto the transverse bars (7) and (107) in a compact manner, as illustrated in Figure 20, in a staggered but front-to-front parallel configuration. The rear portions of bicycles which are secured at their front portions by means of said fore- or aft-front gripping units, (510") or (510'), may be secured, for example, by a said rear gripping unit (550) directly mounted onto transverse bar (107) as hereinbefore described, or alternatively by means of a rear gripping unit (550) coupled to a front gripping unit (510) which is directly mounted onto the transverse bar (107). Each one of the said fore- or aft-front gripping units, (510") or (510'), is adapted for coupling with a said rear gripping unit (550) in a similar manner to said front gripping unit (510), as hereinbefore described *mutatis mutandis*.

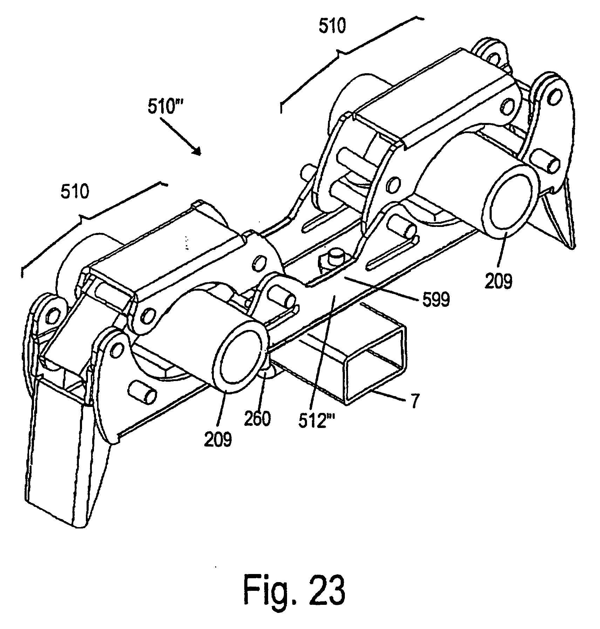

Optionally, and referring to Figure 23, the said front gripping unit (510) of the preferred embodiment may be alternatively or additionally coupled with another said front gripping unit (510) to provide a double front gripping unit (510"'). A longitudinal bridging member (599) is joined to two said front gripping units (510) in back-to-back configuration, such that the said second ends (530) of the corresponding lower longitudinal members (512) are joined to the ends of said longitudinal bridging member (599). Preferably, the said adjacent lower longitudinal members are integrally joined to the said longitudinal bridging member (599) in a single element to form a double lower member (512"'), as illustrated in Figure 23, though the adjacent lower longitudinal members may be otherwise joined to the bridging member (599) permanently, for example by welding, or releasably, with the use, for example, or suitable mounting brackets (not shown). The double front gripping unit (510"') is adapted for mounting onto said structure, and thus the said bridging member (599) preferably comprises a U-shaped retainer (260) for mounting onto transverse bar (7) or (107) via bolts (240), in a similar manner as hereinbefore described for the single front gripping unit (510) of the preferred embodiment, *mutatis mutandis*. The said double front gripping unit (510"'), may be mounted onto one of said transverse bars, say (7), enabling a pair of bicycles to be secured as a pair onto the transverse bars (7) and (107) in a compact manner, in a staggered front-to-front parallel relationship, similar to that shown on Figure 2 for the first embodiment. The rear portions of bicycles which are secured at their front portions by means of said double front gripping unit (510"'), may be secured, for example, by a said rear gripping unit (550) directly mounted onto the second transverse bar (107) longitudinally staggered if necessary via said slots (563) as hereinbefore described or alternatively by means of a rear gripping unit (550) coupled to a front gripping unit (510).

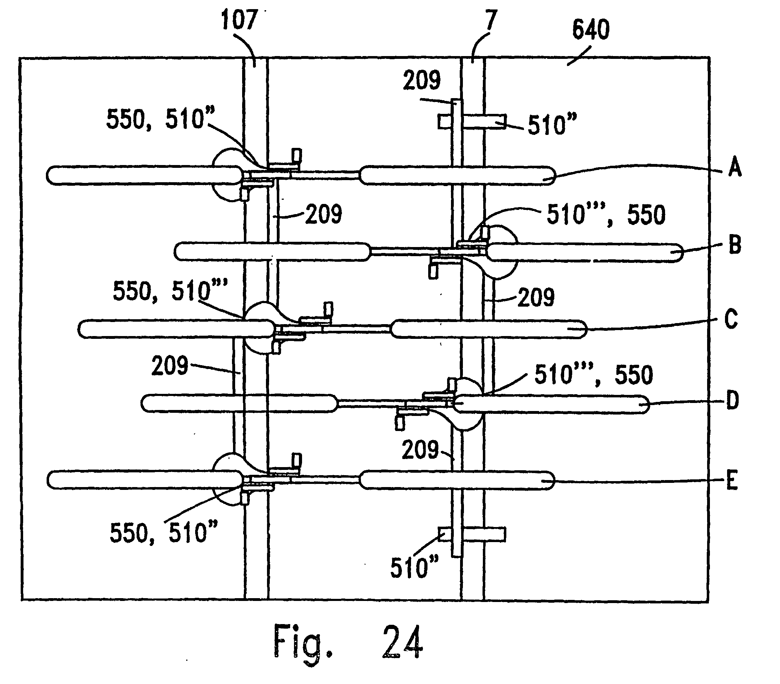

Alternatively, and referring to Figure 24, a more compact system may be provided by coupling a rear gripping unit (550) to one of said fore- or aft-front gripping units, (510") or (510'), or to another said double front gripping unit (510"') directly mounted onto the transverse bar (107). Each said double-front gripping units (510"'), may be further adapted for coupling with a said rear gripping unit (550) in a similar manner to said front gripping unit (510), as hereinbefore described *mutatis mutandis*. Thus, in Figure 24, one said double front gripping unit (510"') with a coupled rear gripping unit (550) secures the seat of bicycle B and the handle bars of adjacent bicycles A and C; another said double front gripping unit (510"') with a coupled rear gripping unit (550) secures the seat of bicycle C and the handle bars of adjacent bicycles B and D; a third said double front gripping unit (510"') with a coupled rear gripping unit (550) secures the seat of bicycle D and the handle bars of adjacent bicycles C and E. One said aft-front gripping unit (510") secures one handle bar of bicycle A, and another said aft-front gripping unit (510") secures one handle bar of bicycle E. One said fore-front gripping unit (510') coupled to a rear gripping unit (550) secures seat of bicycle A and a handle bar of bicycle B, another said aft-front gripping units (510") coupled to a rear gripping unit (550) secures seat of bicycle E and handle bar of bicycle D.

When an arrangement using said staggered front gripping units (510'), (510") or (510"') is used, the rear gripping units (550) may also be mounted to the other transverse bar (107) in a staggered manner by bolting the said U-shaped retainer (260) to the rear gripping unit (550) in a suitable point along an appropriate one of the said plurality of slots (563).

In any case, either when bicycles are mounted singly or in clamped pairs or in clamped clusters to a structure on the upper surface of a vehicle, such arrangements as disclosed herein results in a more stronger and more secure mounting configuration for carrying the same, as well as better fuel consumption for the vehicle, in comparison to many other rooftop bicycle carriers. This is so because bicycles in an upside-down configuration cause less drag, particularly when compactly secured, and because the gripping units of the bicycle carrier of the invention have a smaller surface area. Therefore, the drag is low when one or more bicycles are carried, or when no bicycles are carried and only the gripping units exist. Also, the noise factor is low. Furthermore, the carrier of the invention is simple in structure, and is easy to assemble and operate.

The gripping units of the bicycle carrier of the invention and their parts can be made from different materials, such as metal, plastic, or leather or similar conventional materials known in the art, or indeed advanced materials such as carbon fibre or other composites, for example. Furthermore, the different components comprised in the first and second gripping units may be modified from the precise forms described herein to maximise the advantages arising from using different materials.

## Claims

1. A modular bicycle carrier system for releasably clamping at least one bicycle (600) onto a predetermined structure, comprising :
at least one first gripping unit (15) adapted for releasably gripping a first portion of a bicycle with respect to said structure;
at least one second gripping unit (25) adapted for releasably gripping a second portion of a bicycle with respect to said structure,
**characterised in that**
at least one of said first gripping unit (15) or said second gripping unit (25) is further adapted for coupling with at least one third gripping unit for releasably gripping a portion of another bicycle (600), such as to enable a said third gripping unit to be releasably secured with respect to said structure via said first gripping unit (15) or via said second gripping unit (25), respectively.

2. A modular bicycle carrier system as claimed in claim 1, wherein said structure comprises longitudinally spaced first and second transverse members (7, 107) comprising mounting means (71) for mounting said transverse members onto an upper portion of a vehicle.

3. A modular bicycle carrier system as claimed in claim 2, wherein said upper portion of a vehicle is the roof (640) of a vehicle.

4. A modular bicycle carrier system as claimed in claim 1, wherein said at least first gripping unit (15) and said second gripping unit (25) are adapted for clamping said at least one bicycle in vertically inverted configuration.

5. A modular bicycle carrier system as claimed in claim 2, wherein said at least one first gripping unit (15) is mountable onto said first transverse member (7) via first securing means.

6. A modular bicycle carrier system as claimed in claim 2, wherein said second gripping unit (25) is mountable onto said second transverse member (107) via second securing means.

7. A modular bicycle carrier system as claimed in claim 4, wherein said first gripping unit (15) is adapted for clamping a front portion of a bicycle (600).

8. A modular bicycle carrier system as claimed in claim 7 wherein said front portion comprises a side of a bicycle handlebar (209).

9. A modular bicycle carrier system as claimed in claim 4, wherein said second gripping unit (25) is adapted for clamping a rear portion of a bicycle (600).

10. A modular bicycle carrier system as claimed in claim 9, wherein said rear portion comprises the seat of a bicycle (600).

11. A modular bicycle carrier system as claimed in claim 9, wherein said rear portion comprises the seat post of a bicycle (600).

12. A modular bicycle carrier system as claimed in claim 8, wherein said first gripping unit (15) is adapted for coupling with at least one third gripping unit, and wherein said third gripping unit is adapted for clamping the front portion of another bicycle.

13. A modular bicycle carrier system as claimed in claim 12, wherein said front portion comprises a side of a bicycle handlebar (209).

14. A modular bicycle carrier system as claimed in claim 8, wherein said first gripping unit (15) is adapted for coupling with at least one third gripping unit, and wherein said third gripping unit is adapted for clamping the rear portion of another bicycle (600).

15. A modular bicycle carrier system as claimed in claim 14, wherein said rear portion comprises a seat of a bicycle (600).

16. A modular bicycle carrier system as claimed in claim 9, wherein the second gripping unit (25) comprises an essentially horizontal support for the bicycle seat, said support being attached to the said second transverse member (107), and a belt (403) with a buckle (404) connected to said support for gripping and coupling the seat of the bicycle to said horizontal support.

17. A modular bicycle carrier system as claimed in claim 16, wherein said support is padded.

18. A modular bicycle carrier system as claimed in claim 9, wherein the second gripping unit (25) comprises a gripping portion, and supporting means connecting the gripping portion to the said second transverse member (107).

19. A modular bicycle carrier system as claimed in claim 18, wherein the supporting means are flexible, for absorbing shocks resulting from the movement of the vehicle carrying the bicycle (600).

20. A modular bicycle carrier system as claimed in claim 19, wherein the gripping portion (10) comprises a first clamping element (11) having an essentially U-shaped cross-section for containing a portion of the perimeter of the bicycle seat post (5), a second clamping element (17) for completing containment of substantially the whole perimeter of the seat post (5), and a handle (20) for tensioning, securing and locking the said clamping elements around the seat post (5), or releasing the same.

21. A modular bicycle carrier system as claimed in claim 20, wherein the supporting means comprises at least one supporting bar (3), (103) connected at its first end to said second transverse member, and at its second end to the seat post gripping portion.

22. A modular bicycle carrier system as claimed in claim 12, wherein said first gripping unit (15) is adapted for coupling to said third gripping unit by means of a first portion of a longitudinal extension member (500), wherein said longitudinal extension member (500) is mounted onto said first transverse member (7) via suitable mounting means, said first gripping unit (15) being secured to said first transverse bar (7) by being mounted to said first portion of said longitudinal extension member (500) in longitudinal spaced relationship with said first transverse member (7).

23. A modular bicycle carrier system as claimed in claim 22, wherein said longitudinal extension member (500) comprises a second portion extending from said first transverse member (7) in a direction away from said first gripping unit and wherein said third gripping unit (15) is secured to said first transverse bar (7) by being mounted to said second portion of said longitudinal extension member (500) in longitudinal spaced relationship with said first transverse member.

24. A modular bicycle carrier system as claimed in claim 23, wherein said first portion of said longitudinal extension member (500) and said second portion of said longitudinal extension member (500) are integral.

25. A modular bicycle carrier system as claimed in claim 24, wherein said longitudinal extension member (500) is mounted onto said first transverse member via suitable U-shaped retainer (260).

26. A modular bicycle carrier system as claimed in claim 22, wherein said first gripping unit (15) comprises a vertical rod (206) which is vertically attached at its first end to said first longitudinal extension member (500), a first supporting element for containing a portion of the perimeter of the bicycle handlebar (209), a third clamping element for completing containment of the whole perimeter of the handlebar (209), and a handle hingedly attached to the second end of the said rod, for tensioning, securing and locking the said supporting element with said third clamping element around the bicycle handlebar (209), or releasing the same.

27. A modular bicycle carrier system as claimed in claim 22, wherein said first gripping unit (15) comprises a first supporting element attached to the said first longitudinal extension member (500), for containing a portion of the perimeter of the bicycle handlebar (209), a fourth clamping element (310) for completing containment of the whole perimeter of the handlebar (209), and a handle hingedly attached to the said longitudinal extension member and to said fourth clamping element (310), for tensioning, securing and locking the said supporting element with said fourth clamping element around the bicycle handlebar (209), or releasing the same.

28. A modular bicycle carrier system as claimed in claim 27 wherein the fourth clamping element (310) of each first gripping unit is a belt having buckles at its two ends, the first buckle being connected to the said longitudinal extension member (500), and the second buckle connected to the handle (301), wherein turning the handle (301) in one direction tensions the belt for securing and locking the said supporting element with said belt around the bicycle handlebar (209), and turning the handle in the other direction releases the tension of the belt, thereby allowing the dismounting of the handlebar from the first gripping unit (15).

29. A modular bicycle carrier system as claimed in claim 27, wherein the fourth clamping element (310) of each first gripping unit is a rectangular ring having two ends, the first end being connected to the said longitudinal extension member (500), and the second end being connected to the handle (301), wherein turning the handle (301) in one direction tensions the ring for securing and locking the said supporting element with said ring around the bicycle handlebar (209), and turning the handle in the other direction releases the tension of the ring, thereby allowing the disassembling of the handlebar (209) from the said first gripping unit (15).

30. A modular bicycle carrier system as claimed in any one of claims 22 to 29, wherein said third gripping unit is of the same type as said first gripping unit (15).

31. A modular bicycle carrier system as claimed in claim 14, wherein said first gripping unit (15) is joined to one of said first or second transverse members (7, 107) by means of a suitable U-shaped clamp (260) adapted for releasably mounting said bicycle clamp to said transverse member.

32. A modular bicycle carrier system as claimed in claim 31, wherein said first gripping unit comprises a lower arm (700) and an upper arm (710) hingedly connected to said lower arm (700), at corresponding first ends thereof such as to enable said upper arm (710) to be rotated from a closed position, wherein said first arm and said second arm are in substantially parallel arrangement, to an open position, wherein said upper arm and said lower arm comprise opposed recesses adapted to grippingly hold therebetween a portion of a handlebar (209) of a bicycle (600) when said upper arm (710) and said lower arm (700) are in said closed position, wherein in said open position corresponding free second ends of said upper arm (710) and said lower arm (700) are sufficiently spaced to enable said portion of said handlebar (209) to be inserted into said recesses, said first gripping unit further comprising locking means for releasably locking said upper arm with respect to said lower arm (700).

33. A modular bicycle carrier system as claimed in claim 32, wherein upper arm (710) is hingedly connected to said lower arm (700) at corresponding first ends thereof by means of a suitable hinge arrangement adapted for enabling said upper arm (710) to be detached from said lower arm when said bicycle clamp is not in clamping mode.

34. A modular bicycle carrier system as claimed in claim 32, wherein in said closed position said free ends of said upper arm (710) and said lower arm (700) substantially overlap and comprise aligned apertures, said locking means comprising a fast removal pin (701) insertable via a first end thereof through said aligned apertures, said pin comprising a stop at a second end thereof to limit extent of insertion of said through said apertures, said pin further comprising a longitudinal slit at said first end thereof and comprising a wedge-shaped stop (708) associated with each half of the said pin divided by said slit, said slit and wedge-shaped stops (708) adapted such as to enable said halves of said first end of the pin to be urged together to reduce the transverse cross-section thereof to less than that of said apertures and thus enable said first end of said pin to pass through said aligned apertures, said halves being resilient and springing back to enable the said wedge-shaped stops to lock said pin with respect to said aligned holes.

35. A modular bicycle carrier system as claimed in claim 32, wherein said locking means comprises a U-shaped bar (720) having a base joined to a pair of arms, said U-shaped bar being hingedly joined at the free arms thereof to the free end of said upper arm (710), said U-shaped bar adapted for reversibly swinging from a locking position in which the said base is superposed with respect to the underside of said free end of said lower bar, to an unlocked position wherein the base of the U is spaced from said free end of said lower arm, said base comprising a bolt arrangement capable of being received in a complementary socket disposed on the underside of said lower arm, for locking said U-shaped bar onto said lower arm (700).

36. A modular bicycle carrier system as claimed in claim 32, wherein said locking means comprises a ratchet arrangement comprising a U-shaped bar (725) hinged at the free arms thereof to the free end of said upper arm (710) and having a stop on the base thereof complementary to any one of a plurality of teeth (704) comprised on the free end of said lower arm, said U-shaped bar (725) capable of swinging from a locking position in which the stop of the U-shaped bar (725) is engaged with any one of said teeth (704) of said lower bar, to an unlocked position wherein the base of the U is spaced from said free end of said lower arm.

37. A modular bicycle carrier system as claimed in claim 32, wherein said recesses (742, 752) are suitably padded.

38. A modular bicycle carrier system as claimed in any one of claims 31 to 37, wherein said third gripping unit comprises a belt (732) for releasably securing said rear portion of a bicycle (600), said belt (732) having a suitable buckle arrangement for engaging and securely holding together the two ends of said belt, the said belt being securably coupled to said upper arm (710) of said first gripping unit via a suitable notch (714) comprised therein, and said belt (732) further comprising suitable tensioning means capable of selectively tensioning said belt for securing and locking the said rear portion of a bicycle and for releasing the tension of the belt (732), thereby allowing the dismounting of the said rear portion of a bicycle from the second gripping unit (25).

39. A modular bicycle carrier system as claimed in any one of claims 31 to 37, wherein said third gripping unit comprises a belt (732) for releasably securing said rear portion of a bicycle (600), said belt having a suitable buckle arrangement for engaging and securely holding together the two ends of said belt (732), the said belt (732) being securably attached to a top arm via a suitable notch (714) therein, said third gripping unit being coupled to said first gripping unit whereby said top arm is hingedly attached to said upper arm (710) of said first gripping unit, said belt (732) further comprising suitable tensioning means capable of selectively tensioning said belt (732) for securing and locking the said rear portion of a bicycle (600) and for releasing the tension of the belt (732), thereby allowing the dismounting of the said rear portion of a bicycle (600) from the third gripping unit.

40. A modular bicycle carrier system as claimed in claim 38, wherein said upper arm (710) comprises a substantially U-shaped transverse cross-section.

41. A modular bicycle carrier system as claimed in claim 38, wherein said lower arm (700) comprises a substantially U-shaped transverse cross-section.

42. A modular bicycle carrier system as claimed in claim 39, wherein said upper arm (710) comprises a substantially U-shaped transverse cross-section.

43. A modular bicycle carrier system as claimed in claim 39, wherein said lower arm (700) comprises a substantially U-shaped transverse cross-section.

44. A modular bicycle carrier system as claimed in claims 38 or 40 or 41, for releasably clamping at least one pair of bicycles comprising a first and a second bicycle to a predetermined structure, **characterized in that** said system comprises, for each said pair of bicycles (600), at least two said first gripping units (15) each coupled to a third gripping unit, wherein one said first gripping unit (15) that is coupled to a third gripping unit is mounted onto said first transverse member (7) and wherein the other said first gripping unit (15) that is coupled to a third gripping unit is mounted onto said second transverse member (107), wherein the said first gripping units on said first and second transverse member (107) respectively secure the front portions of said first and second bicycles (600), and wherein the said third gripping units on said second and first transverse members (7, 107) are the corresponding said second gripping units for respectively securing the rear portions of said first and second bicycles.

45. A modular bicycle carrier system as claimed in claims 39 or 42 or 43 for releasably clamping at least one pair of bicycles comprising a first and a second bicycle to a predetermined structure, **characterized in that** said system comprises providing at least two said first gripping units (15) each coupled to a third gripping unit, wherein one said first gripping unit (15) that is coupled to a third gripping unit is mounted onto said first transverse member (7) and wherein the other said first gripping unit that is coupled to a third gripping unit is mounted onto said second transverse member (107), wherein the said first gripping units on said first and second transverse member respectively secure the front portions of said first and second bicycles (600), and wherein the said third gripping units on said second and first transverse members are the corresponding said second gripping units for respectively securing the rear portions of said first and second bicycles (600).

46. A modular bicycle carrier system as claimed in claim 8, wherein said first gripping (15) unit comprises an upper articulated longitudinal member (514) hingedly joined to a lower longitudinal member (512) via a locking member (518), such as to enable the said upper longitudinal member (514) to be selectively pivoted away from said lower longitudinal member (512) to receive therebetween a side of handlebar (209) of a bicycle (600), and towards said lower longitudinal member such as to enable a free end of said upper longitudinal member (514) to releasably engage with a corresponding end of said lower longitudinal member, and wherein said locking member (518) is adapted for locking together said upper longitudinal member with said lower longitudinal member when said free end of said upper longitudinal member is engaged with a corresponding end of said lower longitudinal member (514).

47. A modular bicycle carrier system as claimed in claim 46, wherein said articulated member (514) comprises a hooked recess (515) for engaging with a complementary pin (517) comprised in said corresponding end of said lower longitudinal member.

48. A modular bicycle carrier system as claimed in claim 8, wherein said first gripping (15) unit comprises an upper flexible member hingedly joined to a lower longitudinal member (512) via a locking member (518), such as to enable the said upper longitudinal member (514) to be selectively pivoted away from said lower longitudinal member (512) to receive therebetween a side of handlebar (209) of a bicycle (600), and towards said lower longitudinal member (512) such as to enable a free end of said upper flexible member to releasably engage with a corresponding end of said lower longitudinal member (512), and wherein said locking member is adapted for locking together said upper flexible member with said lower longitudinal member when said free end of said upper flexible member is engaged with a corresponding end of said lower longitudinal member.

49. A modular bicycle carrier system as claimed in claim 48, wherein said flexible member comprises a pin (520) for engaging with a complementary recess comprised in said corresponding end of said lower longitudinal member.

50. A modular bicycle carrier system as claimed in claim 47, wherein said first gripping unit (15) is secured to one of said first or second transverse members (7, 107) by means of a suitable U-shaped retainer arrangement (260).

51. A modular bicycle carrier system as claimed in claim 49, wherein said first gripping unit is secured to one of said first or second transverse members (7, 107) by means of a suitable U-shaped retainer arrangement (260).

52. A modular bicycle carrier system as claimed in claim 9, wherein said second gripping unit (25) comprises a base member for seating thereon a seat of a bicycle and further comprises a belt for releasably securing said rear portion of a bicycle (600), said belt having a suitable buckle arrangement for engaging and securely holding together the two ends of said belt, the said belt being securably coupled to said base member via a suitable notch comprised therein, and said belt further comprising suitable tensioning means capable of selectively tensioning said belt for securing and locking the said rear portion of a bicycle (600) and for releasing the tension of the belt, thereby allowing the dismounting of the said rear portion of a bicycle from the second gripping unit.

53. A modular bicycle carrier system as claimed in claim 52, wherein said base member comprises a bottom bracket adapted for seating said second gripping unit on said second transverse member, and two dihedral wing elements (562) joined to said bottom brackets via transversely spaced corresponding vertical flanges.

54. A modular bicycle carrier system as claimed in claim 53, wherein said second gripping unit (25) is secured to one of said first or second transverse (7, 107) members by means of a suitable U-shaped retainer arrangement (260).

55. A modular bicycle carrier as claimed in claim 54, wherein, said second gripping unit (25) may be secured to one of said first or second transverse members (7, 107) within a range of longitudinal positions relative thereto by means of a plurality of slots adapted for cooperating with said U-shaped retainer arrangement.

56. A modular bicycle carrier system as claimed in claim 47 to 55, wherein said first gripping unit comprises fore and aft pins (542, 544) for enabling said first gripping unit to be coupled to a third gripping unit.

57. A modular bicycle carrier system as claimed in claim 53 and in claim 56, wherein said first gripping unit (15) is adapted for coupling to said third gripping unit, said third gripping unit constituting a second gripping unit, wherein said third gripping unit further comprises fore and aft apertures for enabling said third gripping unit to be coupled to a said first gripping unit (15).

58. A modular bicycle carrier system as claimed in claim 57, further comprising a coupling bracket (590) for coupling said first gripping unit to said third gripping unit.

59. A modular bicycle carrier system as claimed in claim 58, wherein said coupling bracket (590) is mountable onto said third gripping unit via said apertures, and wherein said coupling bracket (590) is engageable onto said fore and aft pins (542, 544) of said first gripping unit.

60. A modular bicycle carrier system as claimed in claim 59, wherein said first gripping unit comprises a suitable notch (554) at one longitudinal end thereof said belt being securably coupled to said first gripping unit instead of said base member for locking together said first gripping unit and said third gripping unit to the rear portion of a bicycle (600).

61. A modular bicycle carrier system as claimed in claim 47, wherein said lower longitudinal member (512', 512") of said first gripping unit comprises a longitudinal extension having securing means for securing said first gripping unit to one of said first or said second transverse members (7, 107) in a longitudinally distanced relationship.

62. A modular bicycle carrier system as claimed in claim 61, wherein said longitudinal extension enables said first gripping unit to be selectively mounted to one of said first or said second transverse member (7, 107) in either a forwardly or an rearwardly longitudinal spaced relationship.

63. A modular bicycle carrier system as claimed in claim 62, wherein said first gripping unit is secured to one of said first or second transverse members (7, 107) by means of a suitable U-shaped retainer arrangement (260).

64. A modular bicycle carrier system as claimed in claims 53 and 63 for releasably clamping at least one pair of bicycles comprising a first and a second bicycle to a predetermined structure in staggered parallel arrangement, **characterized in that** said system comprises providing at least two said first gripping unit (15), wherein one said first gripping unit (15) is mounted onto said first transverse member (7) for respectively securing the front portion of said first bicycle (600) in a forwardly spaced relationship, and wherein the other said first gripping unit (15) is mounted onto said first transverse member (7) in a rearwardly spaced relationship for securing the front portion of said second bicycle, and further comprises said second gripping units (25) for securing the rear portion of said first and said second bicycles to said second transverse member (107).

65. A modular bicycle carrier system for releasably clamping as claimed in claims 54 and 63 at least one pair of bicycles comprising a first and a second bicycle to a predetermined structure in staggered parallel arrangement, **characterized in that** system comprises providing at least two said first gripping (15), wherein one said first gripping unit (15) is mounted onto said first transverse member for respectively securing the front portion of said first bicycle (600) in a forwardly spaced relationship, and wherein the other said first gripping unit is mounted onto said first transverse member (7) in a rearwardly spaced relationship for securing the front portion of said second bicycle (600), and further comprising providing corresponding said second gripping units (25) for securing the rear portion of said first and said second bicycles to said second transverse member (107).

66. A modular bicycle carrier system as claimed in claim 47, wherein said first gripping unit is adapted for coupling to said third gripping unit by means of a longitudinal bridging member (599), wherein said longitudinal bridging member is mounted onto said first transverse member (7) via suitable mounting means, said first gripping (15) unit being joined to said first transverse bar at one longitudinal end thereof, and said third gripping unit being joined to said bridging member at the other end thereof, said third gripping unit constituting another said first gripping unit.

67. A modular bicycle carrier system as claimed in claim 66, wherein said longitudinal bridging member (599) is integral with said longitudinal lower members of said first gripping unit and said third gripping unit.

68. A modular bicycle carrier system as claimed in claim 67, wherein said longitudinal bridging member (599) is secured to one of said first or second transverse members (7, 107) by means of a suitable U-shaped retainer arrangement (260).

69. A modular bicycle carrier system as claimed in claim 66, wherein at least one of said third gripping unit or said first gripping unit is further adapted for coupling to a fourth gripping unit.

70. A modular bicycle carrier system as claimed in claim 69, wherein at least one of said first gripping unit or said third gripping unit comprises fore and aft pins (542, 544) for enabling said first gripping unit to be coupled to said fourth gripping unit.

71. A modular bicycle carrier system as claimed in claim 53 and in claim 70, wherein at least one of said first gripping unit (15) or said third gripping unit is adapted for coupling to said fourth gripping unit, said fourth gripping unit being of the same type as said second gripping unit, wherein said fourth gripping unit further comprises fore and aft apertures for enabling said fourth gripping unit to be coupled to a said first gripping unit (15).

72. A modular bicycle carrier system as claimed in claim 71, further comprising a coupling bracket (590) for coupling at least one of said first gripping unit or said third gripping unit to said fourth gripping unit

73. A modular bicycle carrier system as claimed in claim 72, wherein said coupling bracket (590) is mountable onto said fourth gripping unit via said apertures, and wherein said coupling bracket is engageable onto said fore and aft pins (542, 544) of at least one of said first gripping unit or said third gripping unit.

74. A modular bicycle carrier system as claimed in claim 73, wherein at least one of said first gripping unit or said third gripping unit comprises a suitable notch at one longitudinal end thereof said belt being securably coupled to said first gripping unit or said third gripping unit, respectively, instead of said base member for locking together said first gripping unit or said third gripping unit, respectively, and said fourth gripping unit to the rear portion of a bicycle (600).

75. A modular bicycle carrier system as claimed in any one of claims 1 to 74, wherein at least one of said first gripping unit or said second gripping unit or said third gripping unit is a "geometrical lock" type unit.

## Patentansprüche

1. Modulares Fahrradträgersystem zum lösbaren Festklemmen von zumindest einem Fahrrad (600) auf einer bestimmten Anordnung, mit:
zumindest einer ersten Einspanneinheit (15), die zum lösbaren Einspannen von zumindest einem Abschnitt eines Fahrrads bezüglich der Anordnung ausgelegt ist;
zumindest einer zweiten Einspanneinheit (25), die zum lösbaren Einspannen eines zweiten Abschnitts bezüglich der Anordnung ausgelegt ist,
**dadurch gekennzeichnet, dass**
zumindest eine der ersten Einspanneinheit (15) oder der zweiten Einspanneinheit (25) ferner zum Verbinden mit zumindest einer dritten Einspanneinheit ausgelegt ist, um einen Abschnitt eines weiteren Fahrrads (600) lösbar einzuspannen, derart, dass die dritte Einspanneinheit bezüglich der Anordnung lösbar gesichert werden kann über die erste Einspanneinheit (15) bzw. über die zweite Einspanneinheit (25).

2. Modulares Fahrradträgersystem nach Anspruch 1, wobei die Anordnung einen ersten und einen zweiten Querträger (7, 107), die in Längsrichtung beabstandet sind, aufweist, die Befestigungsmittel (71) zum Befestigen der Querträger auf einem oberen Abschnitt eines Fahrzeugs aufweisen.

3. Modulares Fahrradträgersystem nach Anspruch 2, wobei der obere Abschnitt eines Fahrzeugs das Dach (640) eines Fahrzeugs ist.

4. Modulares Fahrradträgersystem nach Anspruch 1, wobei die zumindest erste Einspanneinheit (15) und die zweite Einspanneinheit (25) zum Festklemmen des zumindest einen Fahrrads in einer vertikalen umgedrehten Lage ausgelegt sind.

5. Modulares Fahrradträgersystem nach Anspruch 2, wobei die zumindest eine erste Einspanneinheit (15) über ein erstes Sicherungsmittel auf dem ersten Querträger (7) befestigbar ist.

6. Modulares Fahrradträgersystem nach Anspruch 2, wobei die zweite Einspanneinheit (25) über ein zweites Sicherungsmittel auf dem zweiten Querträger (107) befestigbar ist.

7. Modulares Fahrradträgersystem nach Anspruch 4, wobei die erste Einspänneinheit (15) zum Festklemmen eines vorderen Abschnitts eines Fahrrads (600) ausgelegt ist.

8. Modulares Fahrradträgersystem nach Anspruch 7, wobei der vordere Abschnitt eine Seite einer Fahrradlenkstange (209) aufweist.

9. Modulares Fahrradträgersystem nach Anspruch 4, wobei die zweite Einspanneinheit (25) zum Festklemmen eines hinteren Abschnitts eines Fahrrads (600) ausgelegt ist.

10. Modulares Fahrradträgersystem nach Anspruch 9, wobei der hintere Abschnitt den Sattel eines Fahrrads (600) aufweist.

11. Modulares Fahrradträgersystem nach Anspruch 9, wobei der hintere Abschnitt die Sattelstütze eines Fahrrads (600) aufweist.

12. Modulares Fahrradträgersystem nach Anspruch 8, wobei die erste Einspanneinheit (15) zum Verbinden mit zumindest einer dritten Einspanneinheit ausgelegt ist, und wobei die dritte Einspanneinheit zum Festklemmen des vorderen Abschnitts eines anderen Fahrrads ausgelegt ist.

13. Modulares Fahrradträgersystem nach Anspruch 12, wobei der vordere Abschnitt eine Seite einer Fahrradlenkatange (209) aufweist.

14. Modulares Fahrradträgersystem nach Anspruch 8, wobei die erste Einspanneinheit (15) zum Verbinden mit zumindest einer dritten Einspanneinheit ausgelegt ist, und wobei die dritte Einspanneinheit zum Festklemmen des hinteren Abschnitts eines anderen Fahrrads (600) ausgelegt ist.

15. Modulares Fahrradträgersystem nach Anspruch 14, wobei der hintere Abschnitt einen Sattel eines Fahrrads (600) aufweist.

16. Modulares Fahrradträgersystem nach Anspruch 9, wobei die zweite Einspanneinheit (25) einen im Wesentlichen horizontalen Träger für den Fahrradsattel aufweist, wobei der Träger an dem zweiten Querträger (107) angebracht ist, und einen Gurt (403) mit einer Schnalle (404) aufweist, die mit dem Träger zum Einspannen und Verbinden des Sattels des Fahrrads an dem horizontalen Träger verbunden sind.

17. Modulares Fahrradträgersystem nach Anspruch 16, wobei der Träger gepolstert ist.

18. Modularen Fahrradträgersystem nach Anspruch 9, wobei die zweite Einspanneinheit (25) einen Einspannabschnitt und Trägermittel aufweist, die den Einspannabschnitt mit dem zweiten Querträger (107) verbinden.

19. Modulares Fahrradträgersystem nach Anspruch 18, wobei das Trägermittel flexibel ist, um Erschütterungen zu absorbieren, die sich aus der Bewegung des das Fahrrad (600) transportierenden Fahrzeugs ergeben.

20. Modulares Fahrradträgersystem nach Anspruch 19, wobei der Einspannabschnitt (10) ein erstes Klemmelement (11) mit einem im Wesentlichen U-förmigen Querschnitt zur Aufnahme eines Abschnitts des Umfangs der Fahrradsattelstütze (5), ein zweites Klemmelement (17) zur Vervollständigung der Aufnahme des im Wesentlichen ganzen Umfange der Sattelstütze (5) und einen Griff (20) aufweist, um die Klemmelemente um die Sattelstütze (5) fest zu spannen, zu sichern und zu verriegeln oder dieselbe freizugeben.

21. Modulares Fahrradträgersystem nach Anspruch 20, wobei das Trägermittel zumindest eine Trägerstange (3), (103) aufweist, die an ihrem ersten Ende mit dem zweiten Querträger verbunden ist und an ihrem zweiten Ende mit dem Sattelstützeneinspannabschnitt.

22. Modulares Fahrradträgersystem nach Anspruch 12, wobei die erste Einspanneinheit (15) zum Verbinden der dritten Einspanneinheit über einen ersten Abschnitt eines sich längs erstreckenden Bauteils (500) ausgelegt ist, wobei das sich längs erstreckende Bauteil (500) auf dem ersten Querträger (7) über ein geeignetes Befestigungsmittel angebracht ist, wobei die erste Einspanneinheit (15) an der ersten Querstange (7) gesichert ist, indem sie an dem ersten Abschnitt des sich längs erstreckenden Bauteils (500) in einem in Längsrichtung beabstandeten Verhältnis zu dem ersten Querträger (7) angebracht ist.

23. Modulares Fahrradträgersystem nach Anspruch 22, wobei das sich längs erstreckende Bauteil (500) einen zweiten Abschnitt aufweist, der sich von dem ersten Querträger (7) in eine Richtung weg von der ersten Einspanneinheit erstreckt und wobei die dritte Einspanneinheit (15) an der ersten Querstange (7) gesichert ist, indem sie an dem zweiten Abschnitt des sich längs erstreckenden Bauteils (500) in einem in Längsrichtung beabstandeten Verhältnis zu dem ersten Querträger angebracht ist.

24. Modulares Fahrradträgersystem nach Anspruch 23, wobei der erste Abschnitt des sich längs erstreckenden Bauteils (500) und der zweite Abschnitt des sich längs erstreckenden Bauteils (500) einstückig ausgebildet sind.

25. Modulares Fahrradträgersystem nach Anspruch 24, wobei das sich längs erstreckende Bauteil (500) an dem ersten Querträger über einen geeigneten U-förmigen Halter (260) angebracht ist.

26. Modulares Fahrradträgersystem nach Anspruch 22, wobei die erste Einspanneinheit (15) einen vertikalen Stab (206) aufweist, der senkrecht mit seinem ersten Ende an dem sich in Längsrichtung erstreckenden Bauteil (500) angebracht ist, ein erstes Trägerelement zur Aufnahme eines Abschnitts des Umfange der Fahrradlenkstange (209), ein drittes Klemmelement zur Vervollständigung der Aufnahme des gesamten Umfangs der Lenkstange (209) und einen Griff aufweist, der klappbar an dem zweiten Ende der Stange angebracht ist, um das Trägerelement mit dem dritten Klemmelement um die Fahrradlenkstange (209) zu spannen, zu sichern und zu verriegeln oder dieselbe freizugeben.

27. Modulares Fahrradträgersystem nach Anspruch 22, wobei die erste Einspanneinheit (15) ein erstes Trägerelement aufweist, das an dem ersten sich in Längsrichtung erstreckenden Bauteil (500) angebracht ist, um einen Abschnitt des Umfangs der Fahrradlenkstange (209) aufzunehmen, ein viertes Klemmelement (310) zur Vervollständigung der Aufnahme des gesamten Umfangs der Lenkstange (209) und einen Griff aufweist, der klappbar an dem sich in Längsrichtung erstreckenden Bauteil und an dem vierten Klemmelement (310) angebracht ist, um das Trägerelement mit dem vierten Klemmelement um die Fahrradlenkstange (209) zu spannen, zu sichern und zu verriegeln oder dieselbe freizugeben.

28. Modulares Fahrradträgersystem nach Anspruch 27, wobei das vierte Klemmelement (310) jeder ersten Einspanneinheit ein Gurt ist, der an seinen zwei Enden Schnallen aufweist, wobei die erste Schnalle mit dem sich in Längsrichtung erstreckenden Bauteil (500) verbunden ist und die zweite Schnalle mit dem Griff (301) verbunden ist, wobei das Drehen des Griffs (301) in eine Richtung den Riemen zum Sichern und Verriegeln des Trägerelements mit dem Gurt um die Fahrradlenkstange (209) spannt, und wobei ein Drehen des Griffs in die andere Richtung die Spannung des Gurts aufhebt, so dass ein Lösen der Lenkstange von der ersten Einspanneinhett (15) möglich wird.

29. Modulares Fahrradträgersystem nach Anspruch 27, wobei das vierte Klemmelement (310) jeder ersten Einspanneinheit ein rechteckiger Ring mit zwei Enden ist, wobei das erste Ende mit dem sich in Längsrichtung erstreckenden Bauteil (500) verbunden ist und wobei das zweite Ende mit dem Griff (301) verbunden ist, wobei ein Drehen des Griffs (301) in eine Richtung den Ring zum Sichern und Verriegeln des Trägerelements mit dem Ring um die Fahrradlenkstange (209) spannt und wobei das Drehen des Griffs in die andere Richtung die Spannung das Rings löst, so dass ein Entfernen der Lenkstange (209) aus der ersten Einspanneinheit (15) möglich wird.

30. Modulares Fahrradträgersystem nach einem der Ansprüche 22 bis 29, wobei die dritte Einspanneinheit vom gleichen Typ ist wie die erste Einspanneinheit (15).

31. Modulares Fahrradträgersystem nach Anspruch 14, wobei die erste Einspanneinheit (15) mit dem ersten oder dem zweiten Querträger (7, 107) über eine geeignete U-förmige Klemme (206) verbunden ist, die zum lösbaren Befestigen der Fahrradklemme an dem Querträger ausgelegt ist.

32. Modulares Fahrradträgersystem nach Anspruch 31, wobei die erste Einspanneinheit einen unteren Arm (700) und einen oberen Arm (710) aufweist, der klappbar mit dem unteren Arm (700) an entsprechenden ersten Enden derart verbunden ist, dass der obere Arm (710) aus einer geschlossenen Position, in der der erste Arm und der zweite Arm im Wesentlichen parallel zueinander sind, in eine obere Position gedreht werden kann, wobei der obere Arm und der untere Arm einander gegenüberliegende Vertiefungen aufweisen, die ausgelegt sind, um dazwischen einen Abschnitt einer Lenkstange (209) eines Fahrrads (600) klemmend zu halten, wenn der obere Arm (710) und der untere Arm (700) in der geschlossenen Position sind, wobei in der offenen Position jeweilige freie zweite Enden des oberen Arms (710) und des unteren Arms (700) ausreichend beabstandet sind, um ein Einstecken des Abschnitts der Lenkstange (209) in die Vertiefungen zu ermöglichen, wobei die erste Einspanneinheit ferner Verriegelungsmittel zum lösbaren Verriegeln des oberen Arms mit Bezug auf den unteren Arm (700) aufweist.

33. Modulares Fahrradträgersystem nach Anspruch 32, wobei der obere Arm (710) klappbar an dem unteren Arm (700) an deren jeweiligen ersten Enden über eine geeignete Scharnieranordnung verbunden ist, die dazu ausgelegt ist, dass der obere Arm (710) von dem unteren Arm gelöst werden kann, wenn die Fahrradklemme nicht im Klemmmodus ist.

34. Modulares Fahrradträgersystem nach Anspruch 32, wobei die freien Enden des oberen Arms (710) und des unteren Arms (700) in der geschlossenen Position sich im Wesentlichen überlappen und ausgerichtete Öffnungen aufweisen, wobei das Verriegelungsmittel einen schnell entfernbaren Stift (710) aufweist, der mit seinem ersten Ende durch die ausgerichteten Öffnungen eingesteckt ist, wobei der Stift einen Anschlag an einem zweiten Ende aufweist, um das Maß des Einsteckens durch die Öffnung zu begrenzen, wobei der Stift ferner einen Längsschlitz an seinem ersten Ende aufweist und einen keilförmigen Anschlag (708) aufweist, der jeder Hälfte des Stifts getrennt durch den Schlitz zugeordnet ist, wobei der Schlitz und die keilförmigen Anschläge (708) so ausgelegt sind, dass die Hälften des ersten Endes des Stifts zusammengebracht werden können, um dessen Querschnitt geringer zu machen als den der Öffnungen und es somit dem ersten Ende des Stifts zu ermöglichen, die ausgerichteten Öffnungen zu passieren, wobei die Hälften federnd sind und zurückspringen, um es den keilförmigen Anschlägen zu ermöglichen, den Stift bezüglich der ausgerichteten Löcher zu verriegeln.

35. Modulares Fahrradträgersystem nach Anspruch 32, wobei das Verriegelungsmittel eine U-förmige Stange (720) mit einer Basis aufweist, die mit einem Paar von Armen verbunden ist, wobei die U-förmige Stange klappbar mit ihren freien Armen an dem freien Ende des oberen Arms (710) verbunden ist, wobei die U-förmige Stange ausgelegt ist, um umkehrbar von einer Verriegelungsposition, in der die Basis in Bezug auf die Unterseite des freien Endes der unteren Stange überlagert ist, in eine nicht verriegelte Position, in der die Basis des U's von dem freien Ende des unteren Arms beabstandet ist, wobei die Basis eine Schraubenanordnung aufweist, die in einem komplementären Sookel aufgenommen werden kann, der in der Unterseite des unteren Arms zum Verriegeln der U-förmigen Stange auf dem unteren Arm (700) angeordnet ist.

36. Modulares Fahrradträgersystem nach Anspruch 32, wobei das Verriegelungsmittel eine Ratschenanordnung aufweist, die eine U-förmige Stange (725) aufweist, die an den freien Armen mit dem freien Ende des oberen Arms (710) klappbar verbunden ist und einen Anschlag auf dessen Basis komplementär zu einem einer Vielzahl von Zähnen (704) besitzt, die am freien Ende des unteren Arms vorhanden sind, wobei die U-förmige Stange (725) aus einer Verriegelungsposition, in der der Anschlag der U-förmigen Stange (725) mit einem der Zähne (704) der unteren Stange in eine unverriegelte Position schwingen kann, wobei die Basis des U's beabstandet ist von dem freien Ende des unteren Arms.

37. Modulares Fahrradträgersystem nach Anspruch 32, wobei die Vertiefungen (742, 752) geeignet gepolstert sind.

38. Modulares Fahrradtragersystem nach einem der Ansprüche 31 bis 37, wobei die dritte Einspanneinheit einen Gurt (732) zum lösbaren Sichern des hinteren Abschnitts eines Fahrrads (600) aufweist, wobei der Gurt (732) eine geeignete Schnallenanordnung zum In-Eingriff-Bringen und sicheren Halten der zwei Enden des Gurts aufweist, wobei der Gurt sicher mit dem oberen Arm (710) der ersten Einspanneinheit über eine geeignete darin vorhandene Kerbe (704) gekoppelt ist, und der Riemen (732) ferner ein geeignetes Spannmittel aufweist, um den Riemen zum Sichern und Verriegeln des hinteren Abschnitts eines Fahrrads selektiv spannen und um die Spannung des Gurts (732) lösen zu können, um dadurch den hinteren Abschnitt eines Fahrrads aus der zweiten Einspanneinheit (25) nehmen zu können.

39. Modulares Fahrradträgersystem nach einem der Ansprüche 31 bis 37, wobei die dritte Einspanneinheit einen Gurt (732) zum lösbaren Sichern des hinteren Abschnitts eines Fahrrads (600) aufweist, wobei der Gurt eine geeignete Schnallenanordnung besitzt, die mit den beiden Enden des Gurts (732) in Eingriff steht und diese sicher zusammenhält, wobei der Gurt (732) sicher an einem obersten Arm über eine geeignete Kerbe (714) darin angebracht ist, wobei die dritte Einspanneinheit mit der ersten Einspanneinheit verbunden ist, wobei der oberste Arm klappbar an dem oberen Arm (710) der ersten Einspanneinheit angebracht ist, wobei der Gurt (732) ferner umfasst ein geeignetes Spannmittel, das in der Lage ist, den Gurt (732) selektiv zu spannen, um den hinteren Abschnitt eines Fahrrads (600) zu sichern und zu verriegeln und um die Spannung des Gurts (732) zu lösen, um damit ein Entfernen des hinteren Abschnitts eines Fahrrads (600) aus der dritten Einspanneinheit zu ermöglichen.

40. Modulares Fahrradträgersystem nach Anspruch 38, wobei der obere Arm (710) einen im Wesentlichen U-förmigen Querschnitt in Querrichtung aufweist.

41. Modulares Fahrradträgersystem nach Anspruch 38, wobei der untere Arm (700) einen im Wesentlichen U-förmigen Querschnitt in Querrichtung besitzt.

42. Modulares Fahrradträgersystem nach Anspruch 39, wobei der obere Arm (710) einen im Wesentlichen U-fönnigen Querschnitt in Querrichtung aufweist.

43. Modulares Fahrradträgersystem nach Anspruch 39, wobei der untere Arm (700) einen im Wesentlichen U-förmigen Querschnitt in Querrichtung aufweist.

44. Modulares Fahrradträgersystem nach Ansprüchen 38 oder 40 oder 41, zum lösbaren Festklemmen von zumindest einem Paar von Fahrrädern mit einem ersten und einem zweiten Fahrrad an einer vorgegebenen Anordnung, **dadurch gekennzeichnet, dass** das System für jedes Paar von Fahrrädern (600) aufweist: zumindest zwei der ersten Einspanneinheiten (15), die jeweils mit einer dritten Einspanneinheit verbunden sind, wobei eine erste Einspanneinheit (15), die mit einer dritten Einspanneinheit verbunden ist, auf dem ersten Querträge (7) angebracht ist und wobei die andere erste Einspanneinheit (15), die mit einer dritten Einspanneinheit verbunden ist, an dem zweiten Querträger (107) angebracht ist, wobei die ersten Einspanneinheiten auf dem ersten bzw. zweiten Querträger (107) die vorderen Abschnitte des ersten und des zweiten Fahrrads (600) sichern, und wobei die dritten Einspanneinbeiten auf den zweiten und dritten Querträgern (7, 107) die entsprechenden zweiten Einspanneinheiten sind, um jeweils die hinteren Abschnitte des ersten und des zweiten Fahrrads zu sichern.

45. Modulares Fahrradträgersystem nach Ansprüchen 39 oder 42 oder 43 zum lösbaren Festklemmen von zumindest einem Paar von Fahrrädern mit einem ersten und einem zweiten Fahrrad an einer vorgegebenen Anordnung, **dadurch gekennzeichnet, dass** das System zumindest zwei erste Einspanneinheiten (15) aufweist, die jeweils mit einer dritten Einspanneinheit verbunden sind, wobei eine erste Einspanneinheit (15), die mit einer dritten Einspanneinheit verbunden ist, an dem ersten Querträger (7) angebracht ist und wobei die andere erste Einspanneinheit, die mit einer dritten Einspanneinheit verbunden ist, an dem zweiten Querträger (107) angebracht ist, wobei die ersten Einspanneinheiten auf dem ersten und dem zweiten Querträger jeweils die vorderen Abschnitte des ersten und des zweiten Fahrrads (600) sichern, und wobei die dritten Einspanneinheiten auf dem zweiten und dem ersten Querträger die entsprechenden zweiten Einspanneinheiten zum jeweiligen Sichern der hinteren Abschnitte des ersten und des zweiten Fahrrads (600) sind.

46. Modulares Fahrradträgersystem nach Anspruch 8, wobei die erste Einspanneinheit (15) ein oberes bewegliches Längs-Bauelement (514) aufweist, das klappbar an einem unteren Längs-Bauelement (512) über ein Verriegelungsbauelement (518) verbunden ist, so dass das obere Längs-Bauelement (514) weg von dem unteren Längs-Bauelement (512) selektiv schwenkbar ist, um dazwischen eine Seite der Lenkstange (209) eines Fahrrads (600) aufzunehmen und in Richtung des unteren Längs-Bauelements, um es dem freien Ende des oberen Länge-Bauelements (514) zu ermöglichen, in lösbaren Eingriff mit einem entsprechenden Ende des unteren Längs-Bauelements zu gelangen, und wobei das Verriegelungsbauelement (518) zum Verriegeln des oberen Längs-Bauelements mit dem unteren Längs-Bauelement ausgelegt ist, wenn das freie Ende des oberen Längs-Bauelements in Eingriff mit einem entsprechenden Ende des unteren Längs-Bauelements (514) gelangt.

47. Modularen Fahrradträgersystem nach Anspruch 46, wobei das bewegliche Bauelement (514) eine hakenförmige Vertiefung (515) für einen Eingriff mit einem komplementären Stift (517) aufweist, der in einem entsprechenden Ende des unteren Längs-Bauelements vorgesehen ist.

48. Modulares Fahrradträgersystem nach Anspruch 8, wobei die erste Einspanneinheit (15) ein oberes flexibles Bauelement aufweist, das klappbar mit einem unteren Längs-Bauelement (512) über ein Verriegelungsbauelement (518) verbunden ist, so dass das obere Länge-Bauelement (514) selektiv weg von dem unteren Längs-Bauelement (512) schwenkbar ist, um dazwischen eine Seite der Lenkstange (209) eines Fahrrads (600) aufzunehmen und in Richtung des unteren Längs-Bauelements (512), um so ein freies Ende des oberen flexiblen Bauelements lösbar mit einem entsprechenden Ende des unteren Längs-Bauelements (512) in Eingriff zu bringen, und wobei das Verriegelungabauelement dafür ausgelegt ist, das obere flexible Bauelement mit dem unteren Längs-Bauelement zu verriegeln, wenn das freie Ende des oberen flexiblen Bauelements mit einem entsprechenden Ende des unteren Längs-Bauelements in Eingriff gelangt.

49. Modulares Fahrradträgersystem nach Anspruch 48, wobei das flexible Bauelement einen Stift (512) zum Zusammenwirken mit einer komplementären Vertiefung aufweist, die in dem jeweiligen Ende des unteren Längs-Bauelements vorgesehen ist.

50. Modulares Fahrradträgersystem nach Anspruch 47, wobei die erste Einspanneinheit (15) dem ersten oder dem zweiten Querträger (7, 107) über eine geeignete U-förmige Halteranordnung (260) gesichert ist.

51. Modulares Fahrradträgersystem nach Anspruch 49, wobei die erste Einspanneinheit an dem ersten oder dem zweiten Querträger (7, 107) über eine geeignete U-förmige Halteanordnung (260) gesichert ist.

52. Modulares Fahrradträgersystem nach Anspruch 9, wobei die zweite Einspanneinheit (25) ein Basisbauteil aufweist, um darauf einen Sattel eines Fahrrads aufzunehmen, und ferner einen Gurt zum lösbaren Sichern des hinteren Abschnitts eines Fahrrads (600) aufweist, wobei der Gurt eine geeignete Schnallenanordnung für den Eingriff und das sichere Halten zweier Enden des Gurts besitzt, wobei der Gurt sicher mit dem Basisbauelement über eine geeignete Kerbe verbunden ist, die darin vorgesehen ist, und wobei der Gurt ferner geeignete Spannmittel umfasst, die den Gurt zum Sichern und Verriegeln des hinteren Abschnitts eines Fahrrads (600) einspannen und verriegeln können, und um die Spannung des Gurts zu lösen, so dass der hintere Abschnitt eines Fahrrads aus der zweiten Einspanneinheit entfernt werden kann.

53. Modulares Fahrradträgersystem nach Anspruch 52, wobei das Basisbauelement eine Bodenklammer aufweist, die ausgelegt ist, um die zweite Einspanneinheit auf dem zweiten Querträger zu lagern, und zwei V-Flügelelemente (562) aufweist, die mit den Bodenklammern über in Querrichtung beabstandete entsprechende vertikale Flansche verbunden sind.

54. Modulares Fahrradträgersystem nach Anspruch 53, wobei die zweite Einspanneinheit (25) an dem ersten oder dem zweiten Querträger (7, 107) über eine geeignete U-förmige Halteanordnung (260) gesichert ist.

55. Modulares Fahrradträgersystem nach Anspruch 54, wobei die zweite Einspanneinheit (25) an dem ersten oder dem zweiten Querträger (7, 107) innerhalb eines Bereichs von Längspositionen über eine Vielzahl von Schlitzen gesichert werden kann, die zum Zusammenwirken mit der U-förmigen Halteanordnung ausgelegt sind.

56. Modulares Fahrradträgersystem nach Anspruch 47 bis 55, wobei die erste Einspanneinheit vordere und hintere Stifte (542, 544) aufweist, um ein Verbinden der ersten Einspanneinheit mit einer dritten Einspanneinheit zu ermöglichen.

57. Modulares Fahrradträgersystem nach Anspruch 53 und nach Anspruch 56, wobei die erste Einspanneinheit (15) zum Verbinden mit der dritten Einspanneinheit ausgelegt ist, wobei die dritte Einspanneinheit eine zweite Einspanneinheit bildet, wobei die dritte Einspanneinheit ferner vordere und hintere Öffnungen besitzt, die ein Verbinden der dritten Einspanneinheit mit einer ersten Einspanneinheit (15) ermöglichen.

58. Modulares Fahrradträgersystem nach Anspruch 57, ferner mit einer Verbindungsklammer (590) zum Verbinden der ersten Binspanneinheit mit der dritten Einspanneinheit.

59. Modulares Fahrradträgersystem nach Anspruch 58, wobei die verbindungsklammer (590) auf der dritten Einspanneinheit über die Öffnungen anbringbar ist, und wobei die Verbindungsklammer (590) mit den vorderen und hinteren Stiften (542, 544) der ersten Einspanneinheit in Eingriff bringbar sind.

60. Modulares Fahrradträgersystem nach Anspruch 59, wobei die erste Einspanneinheit eine geeignete Aussparung (554) an deren einem Längsende aufweist, wobei der Gurt sicher mit der ersten Einspanneinheit an Stelle des Basisbauteils sicher verbunden ist, um die erste Einspanneinheit mit der dritten Einspanneinheit mit dem hinteren Abschnitt eines Fahrrads (600) zu verriegeln.

61. Modulares Fahrradträgersystem nach Anspruch 47, wobei das untere Längs-Bauelement (512', 512'') der ersten Einspanneinheit eine Längs-Verlängerung mit einem Sicherungsmittel zum Sichern der ersten Einspanneinheit an einem der ersten und zweiten Querträger (7, 107) in einem längs beabstandeten Verhältnis aufweist.

62. Modulares Fahrradträgersystem nach Anspruch 61, wobei es die Längs-Verlängerung der ersten Binspanneinheit ermöglicht, selektiv auf dem ersten oder dem zweiten Querträger (7, 107) in einem entweder nach vorne oder nach hinten in Längsrichtung beabstandeten Verhältnis angebracht zu werden.

63. Modulares Fahrradträgersystem nach Anspruch 62, wobei die erste Einspanneinheit mit dem ersten oder dem zweiten Querträger (7, 107) über eine geeignete U-förmige Halteanordnung (260) gesichert ist.

64. Modulares Fahrradträgersystem nach Ansprüchen 53 und 63 zum lösbaren Klemmen von zumindest einem Paar von Fahrrädern mit einem ersten und einem zweiten Fahrrad an einer vorbestimmten Anordnung in einer gestapelten parallelen Anordnung, **dadurch gekennzeichnet, dass** das System zumindest zwei Einspanneinheiten (15) aufweist, wobei die erste Einspanneinheit (15) auf dem ersten Querelement (7) zur entsprechenden Sicherung des vorderen Abschnitts des ersten Fahrrads (600) in einem vorwärts beabstandeten Verhältnis, und wobei die andere erste Einspanneinheit (15) auf dem ersten Querträger (7) in einem nach hinten beabstandeten Verhältnis zum Sichern des vorderen Abschnitts des zweiten Fahrrads angebracht ist, und ferner die zweiten Einspanneinheiten (25) zum Sichern des hinteren Abschnitts des ersten und des zweiten Fahrrads an dem zweiten Querträger (107) aufweist.

65. Modulares Fahrradträgersystem nach Ansprüchen 54 und 63 zum lösbaren Klemmen von zumindest einem Paar von Fahrrädern mit einem ersten und einem zweiten Fahrrad an einer vorbestimmten Anordnung in einer versetzten parallelen Anordnung, **dadurch gekennzeichnet, dass** das System aufweist zumindest zwei erste Einspanneinheiten (15), wobei eine erste Einspanneinheit (15) an dem ersten Querträger zur jeweiligen Sicherung des vorderen Abschnitts des ersten Fahrrads (600) in einem vorwärts beabstandeten Verhältnis angebracht ist, und wobei die andere erste Einspanneinheit an dem ersten Querträger (7) in einem nach hinten beabstandeten Verhältnis zum Sichern des vorderen Abschnitts des zweiten Fahrrads (600) angebracht ist, und wobei ferner entsprechende zweite Einspanneinheiten (25) zum Sichern des hinteren Abschnitts des ersten und des zweiten Fahrrads an dem zweiten Querträger (107) vorgesehen sind.

66. Modulares Fahrradträgersystem nach Anspruch 47, wobei die erste Einspanneinheit zum Verbinden mit der dritten Einspanneinheit über ein längs verlaufendes Brückenbauelement (599) ausgelegt ist, wobei das längs verlaufende Brückenbauelement an dem ersten Querträger (7) über geeignete Befestigungsmittel angebracht ist, wobei die erste Einspanneinheit (15) mit dem ersten Querträger an dessen Längsende verbunden ist, und wobei die dritte Einspanneinheit mit dem Brückenbauelement an dessen anderem Ende verbunden ist, wobei die dritte Einspanneinheit eine andere erste Einspanneinheit bildet.

67. Modulares Fahrradträgersystem nach Anspruch 66, wobei das längs verlaufende Brückenbauelement (599) einstückig mit den unteren Längs-Bauelementen der ersten Einspanneinheit und der dritten Einspanneinheit ausgebildet ist.

68. Modulares Fahrradträgersystem nach Anspruch 67, wobei das längs verlaufende Brückenbauelement (599) an dem ersten oder dem zweiten Querträger (7, 107) über eine geeignete U-förmige Halteanordnung (260) angebracht ist.

69. Modulares Fahrradträgersystem nach Anspruch 66, wobei zumindest die dritte Einspanneinheit oder die erste Einspanneinheit ferner zum Verbinden mit einer vierten Einspanneinheit ausgelegt ist.

70. Modulares Fahrradträgersystem nach Anspruch 69, wobei zumindest die erste Einspanneinheit oder die dritte Einspanneinheit vordere und hintere Stifte (542, 544) aufweist, um ein Verbinden der ersten Einspanneinheit mit der vierten Einspanneinheit zu ermöglichen.

71. Modulares Fahrradträgersystem nach Anspruch 53 und Anspruch 70, wobei zumindest die erste Einspanneinheit (15) oder die dritte Einspanneinheit zum Verbinden mit der vierten Einspanneinheit ausgelegt ist, wobei die vierte Einspanneinheit vom gleichen Typ wie die zweite Einspanneinheit ist, wobei die vierte Einspanneinheit ferner eine vordere und eine hintere Öffnung besitzt, um ein Verbinden der vierten Einspanneinheit mit einer ersten Einspanneinheit (15) zu ermöglichen.

72. Modulares Fahrradträgersystem nach Anspruch 71, ferner mit einer Verbindungsklammer (590) zum Verbinden von zumindest der ersten Einspanneinheit oder der dritten Einspanneinheit mit der vierten Einspanneinheit.

73. Modulares Fahrradträgersystem nach Anspruch 72, wobei die verbindungsklammer (590) auf der vierten Einspanneinheit über die Öffnungen anbringbar ist, und wobei die Verbindungsklammer mit den vorderen und hinteren Stiften (542, 544) von zumindest der ersten Einspanneinheit oder der dritten Einspanneinheit in Eingriff bringbar ist.

74. Modulares Fahrradträgersystem nach Anspruch 73, wobei zumindest die erste Einspanneinheit oder die dritte Einspanneinheit eine geeignete Aussparung an deren einem Längsende aufweist, wobei der Gurt sicher mit der ersten Einspanneinheit bzw. der dritten Einspanneinheit verbunden ist, an Stelle des Basisbauelements, um die erste Einspanneinheit bzw. die dritte Einspanneinheit und die vierte Einspanneinheit mit dem hinteren Abschnitt eines Fahrrads (600) zu verriegeln.

75. Modulares Fahrradträgersystem nach einem der Ansprüche 1 bis 74, wobei zumindest die erste Einspanneinheit oder die zweite Einspanneinheit oder die dritte Einspanneinheit eine "geometrische Verriegelungs"-Einheit ist.

## Revendications

1. Porte-bicyclettes modulaire destiné à fixer de façon libérable au moins une bicyclette (600) sur une structure prédéterminée, comprenant :
au moins un premier organe de serrage (15) susceptible de serrer, de façon libérable, une première partie d'une bicyclette vis-à-vis de la structure ;
au moins un deuxième organe de serrage (25) susceptible de serrer, de façon libérable, une deuxième partie d'une bicyclette vis-à-vis de la structure,
**caractérisé en ce qu'**
au moins l'un des organes, choisi parmi le premier organe de serrage (15) ou le deuxième organe de serrage (25) est adapté, en outre, à être couplé à au moins un troisième organe, pour serrer, de façon libérable, une partie d'une autre bicyclette (600), de telle façon qu'il soit possible qu'un troisième organe soit fixé, de façon détachable, vis-à-vis de la structure, par l'intermédiaire du premier organe de serrage (15) ou par l'intermédiaire du deuxième organe de serrage (25), respectivement.

2. Porte-bicyclettes modulaire selon la revendication 1, dans lequel la structure comprend des première et deuxième barres transversales (7, 107), espacées longitudinalement, qui comprennent des éléments de montage (71) destinés à monter les barres transversales sur une partie supérieure d'un véhicule.

3. Porte-bicyclettes modulaire selon la revendication 2, dans lequel la partie supérieure d'un véhicule est le toit (640) d'un véhicule.

4. Porte-bicyclettes modulaire selon la revendication 1, dans lequel le premier organe de serrage (15), au nombre minimum d'un, et le deuxième organe de serrage (25) sont susceptibles de fixer au moins une bicyclette dans une position où elle est renversée et verticale.

5. Porte-bicyclettes modulaire selon la revendication 2, dans lequel le premier organe de serrage (15), au nombre minimum d'un, est susceptible d'être monté sur la première barre transversale (7) par des premiers éléments de fixation.

6. Porte-bicyclettes modulaire selon la revendication 2, dans lequel le deuxième organe de serrage (25) est susceptible d'être monté sur la deuxième barre transversale (107) par des deuxièmes éléments de fixation.

7. Porte-bicyclettes modulaire selon la revendication 4, dans lequel le premier organe de serrage (15) est susceptible de fixer une partie avant d'une bicyclette (600).

8. Porte-bicyclettes modulaire selon la revendication 7, dans lequel cette partie avant comprend un côté d'un guidon (209) de bicyclette.

9. Porte-bicyclettes modulaire selon la revendication 4, dans lequel le deuxième organe de serrage (25) est susceptible de fixer une partie arrière d'une bicyclette (600).

10. Porte-bicyclettes modulaire selon la revendication 9, dans lequel cette partie arrière comprend la selle d'une bicyclette (600).

11. Porte-bicyclettes modulaire selon la revendication 9, dans lequel cette partie arrière comprend le tube de selle d'une bicyclette (600).

12. Porte-bicyclettes modulaire selon la revendication 8, dans lequel le premier organe de serrage (15) est susceptible de se coupler à au moins un troisième organe de serrage, et dans lequel le troisième organe de serrage est susceptible de fixer la partie avant d'une autre bicyclette.

13. Porte-bicyclettes modulaire selon la revendication 12, dans lequel cette partie avant comprend un côté d'un guidon (209) de bicyclette.

14. Porte-bicyclettes modulaire selon la revendication 8, dans lequel le premier organe de serrage (15) est susceptible de se coupler à au moins un troisième organe de serrage, et dans lequel le troisième organe de serrage est susceptible de fixer la partie arrière d'une autre bicyclette (600).

15. Porte-bicyclettes modulaire selon la revendication 14, dans lequel cette partie arrière comprend une selle d'une bicyclette (600).

16. Porte-bicyclettes modulaire selon la revendication 9, dans lequel le deuxième organe de serrage (25) comprend un support sensiblement horizontal pour la selle de bicyclette, ce support étant monté sur la deuxième barre transversale (107), et une courroie (403) à boucle (404) reliée au support, afin de saisir et attacher la selle de la bicyclette sur le support horizontal.

17. Porte-bicyclettes modulaire selon la revendication 16, dans lequel le support est rembourré.

18. Porte-bicyclettes modulaire selon la revendication 9, dans lequel le deuxième organe de serrage (25) comprend une partie de serrage, et des moyens formant support reliant la partie de serrage à la deuxième barre transversale (107).

19. Porte-bicyclettes modulaire selon la revendication 18, dans lequel les moyens formant support sont flexibles, afin d'absorber les chocs qui résultent du déplacement du véhicule qui porte la bicyclette (600).

20. Porte-bicyclettes modulaire selon la revendication 19, dans lequel la partie de serrage (10) comprend un premier élément de fixation (11) présentant une section transversale sensiblement en forme de U, destinée à contenir une partie du périmètre du tube de selle (5) de la bicyclette, un deuxième élément de fixation (17) destiné à achever l'enserrement de sensiblement la totalité du périmètre du tube de selle (5), et une poignée destinée à tendre, fixer et verrouiller les éléments de fixation autour du tube de selle (5), ou à dégager celui-ci.

21. Porte-bicyclettes modulaire selon la revendication 20, dans lequel les moyens formant support comprennent au moins une barre de support (3), (103) reliée, à sa première extrémité, à la deuxième barre transversale et, à sa deuxième extrémité, à la partie de fixation du tube de selle.

22. Porte-bicyclettes modulaire selon la revendication 12, dans lequel le premier organe de serrage (15) est susceptible d'être couplé au troisième organe de serrage au moyen d'une première partie d'un élément d'extension longitudinal (500), dans lequel l'élément d'extension longitudinal (500) est monté sur la première barre transversale grâce à des moyens de montage adaptés, le premier organe de serrage (15) étant fixé à la première barre transversale (7) en étant monté sur la première partie de l'élément d'extension longitudinal (500), en étant espacé longitudinalement par rapport à la première barre transversale (7).

23. Porte-bicyclettes modulaire selon la revendication 22, dans lequel l'élément d'extension longitudinal (500) comprend une deuxième partie qui s'étend, à partir de la première barre transversale (7), dans une direction opposée au premier organe de serrage, et dans lequel le troisième organe de serrage (15) est fixé sur la première barre transversale (7) en étant monté sur la deuxième partie de l'élément d'extension longitudinal (500), en étant espacé longitudinalement par rapport à la première barre transversale (7).

24. Porte-bicyclettes modulaire selon la revendication 23, dans lequel la première partie de l'élément d'extension longitudinal (500) et la deuxième partie de l'élément d'extension longitudinal (500) ne forment qu'une seule pièce.

25. Porte-bicyclettes modulaire selon la revendication 24, dans lequel l'élément d'extension longitudinal (500) est monté sur la première barre transversale par un élément de retenue (260) adapté, en forme de U.

26. Porte-bicyclettes modulaire selon la revendication 22, dans lequel le premier organe de serrage (15) comprend une tige verticale (206) qui est fixée verticalement, à sa première extrémité, à l'élément d'extension longitudinal (500), un premier élément formant support pour contenir une partie du périmètre du guidon (209) de la bicyclette, un troisième élément de fixation pour achever l'enserrement de la totalité du périmètre du guidon (209), et une poignée articulée sur la deuxième extrémité de la tige, afin de tendre, fixer et verrouiller l'élément formant support, avec le troisième élément de fixation, autour du guidon (209) de la bicyclette, ou afin de dégager celui-ci.

27. Porte-bicyclettes modulaire selon la revendication 22, dans lequel le premier organe de serrage (15) comprend un premier élément formant support, fixé sur le premier élément d'extension longitudinal (500), pour contenir une partie du périmètre du guidon (209) de la bicyclette, un quatrième élément de fixation (310) pour achever l'enserrement de la totalité du périmètre du guidon (209), et une poignée articulée sur l'élément d'extension longitudinal et sur le quatrième élément de fixation (310), afin de tendre, fixer et verrouiller l'élément formant support, avec le quatrième élément de fixation, autour du guidon (209) de la bicyclette, ou afin de dégager celui-ci.

28. Porte-bicyclettes modulaire selon la revendication 27, dans lequel le quatrième élément de fixation (310) de chaque premier organe de serrage est une courroie équipée de boucles à ses deux extrémités, la première boucle étant reliée à l'élément d'extension longitudinal (500), et la deuxième boucle étant reliée à la poignée (301), dans lequel la rotation de la poignée (301) dans une direction tend la courroie afin de fixer et verrouiller l'élément formant support avec la courroie autour du guidon (209) de la bicyclette, et la rotation de la poignée dans l'autre direction relâche la tension de la courroie, permettant ainsi de démonter le guidon du premier organe de serrage (15).

29. Porte-bicyclettes modulaire selon la revendication 27, dans lequel le quatrième élément de fixation (310) de chaque premier organe de serrage est une bague rectangulaire présentant deux extrémités, la première extrémité étant reliée à l'élément d'extension longitudinal (500), et la deuxième extrémité étant reliée à la poignée (301), dans lequel la rotation de la poignée (301) dans une direction tend la bague afin de fixer et verrouiller l'élément formant support avec la bague autour du guidon (209) de la bicyclette, et la rotation de la poignée dans l'autre direction relâche la tension de la bague, permettant ainsi de démonter le guidon (209) du premier organe de serrage (15).

30. Porte-bicyclettes modulaire selon l'une quelconque des revendications 22 à 29, dans lequel le troisième organe de serrage est du même type que le premier organe de serrage (15).

31. Porte-bicyclettes modulaire selon la revendication 14, dans lequel le premier organe de serrage (15) est monté sur la première ou la deuxième barre transversale (7, 107) au moyen d'un étrier adapté en forme de U (260) adapté pour monter l'étrier, de façon libérable, sur la barre transversale.

32. Porte-bicyclettes modulaire selon la revendication 31, dans lequel le premier organe de serrage comprend un bras inférieur (700) et un bras supérieur (710) articulé sur le bras inférieur (700), au niveau de leurs premières extrémités correspondantes, afin de permettre au bras supérieur (710) d'être amené à tourner à partir d'une position de fermeture, dans lequel le premier bras et le deuxième bras sont disposés de façon sensiblement parallèle, dans une position d'ouverture, dans lequel le bras supérieur et le bras inférieur comprennent des évidements opposés adaptés pour maintenir de façon serrée, entre eux, une partie d'un guidon (209) d'une bicyclette (600) lorsque le bras supérieur (710) et le bras inférieur (700) se trouvent en position de fermeture, dans lequel, dans la position d'ouverture, les deuxièmes extrémités libres correspondantes du bras supérieur (710) et du bras inférieur (700) sont suffisamment espacées pour permettre à la partie du guidon (209) d'être insérée dans les évidements, le premier organe de serrage comprenant, en outre, des moyens de verrouillage pour verrouiller, de façon libérable, le bras supérieur vis-à-vis du bras inférieur (700).

33. Porte-bicyclettes modulaire selon la revendication 32, dans lequel le bras supérieur (710) est articulé sur le bras inférieur (700) au niveau de leurs premières extrémités correspondantes, au moyen d'une articulation adaptée permettant au bras supérieur (710) d'être dégagé du bras inférieur lorsque le crampon à bicyclette n'est pas en mode de fixation.

34. Porte-bicyclettes modulaire selon la revendication 32, dans lequel, en position de fermeture, les extrémités libres du bras supérieur (710) et du bras inférieur (700) se superposent sensiblement et présentent des ouvertures alignées, les moyens de verrouillage comprenant un doigt à retrait rapide (701) susceptible d'être inséré, par une première extrémité de celui-ci, dans les ouvertures alignées, le doigt comprenant une butée, à une deuxième extrémité de celui-ci, pour limiter l'insertion de ce doigt dans les ouvertures, le doigt comprenant, en outre, une fente longitudinale, à sa première extrémité, et comprenant une butée en forme de clavette (708) associée à chaque moitié du doigt, qui est divisé par la fente, la fente et les butées en forme de clavettes (708) étant adaptées pour permettre aux moitiés de la première extrémité du doigt d'être poussées l'une vers l'autre afin de réduire leur section transversale et qu'elle soit inférieure à celle des ouvertures, permettant ainsi à la première extrémité du doigt de passer à travers les ouvertures alignées, les moitiés étant élastiques et revenant élastiquement pour permettre aux butées en forme de clavettes de verrouiller le doigt par rapport aux perçages alignés.

35. Porte-bicyclettes modulaire selon la revendication 32, dans lequel les moyens de verrouillage comprennent une barre en forme de U (720) présentant une base assemblée à une paire de bras, la barre en forme de U étant articulée, par ses bras libres, sur l'extrémité libre du bras supérieur (710), la barre en forme de U étant adaptée pour osciller, de façon réversible, d'une position de verrouillage, dans laquelle la base est superposée à la face inférieure de l'extrémité libre de la barre inférieure, dans une position déverrouillée, dans laquelle la base du U est espacée de l'extrémité libre du bras inférieur, la base comprenant un système à boulon susceptible d'être reçu dans un logement complémentaire situé sur la face inférieure du bras inférieur, pour verrouiller la barre en forme de U sur le bras inférieur (700).

36. Porte-bicyclettes modulaire selon la revendication 32, dans lequel les moyens de verrouillage comprennent un système à cliquet comprenant une barre en forme de U (725) articulée, par ses bras libres, sur l'extrémité libre du bras supérieur (710) et présentant, à sa base, une butée complémentaire de l'une quelconque d'une pluralité de dents (704) présentes sur l'extrémité libre du bras inférieur, la barre en forme de U (725) étant susceptible d'osciller d'une position de verrouillage, dans laquelle la butée de la barre en forme de U (725) coopère avec l'une quelconque des dents (704) de la barre inférieure, dans une position déverrouillée dans laquelle la base du U est espacée de l'extrémité libre du bras inférieur.

37. Porte-bicyclettes modulaire selon la revendication 32, dans lequel les logements (742, 752) sont rembourrés de façon adaptée.

38. Porte-bicyclettes modulaire selon l'une quelconque des revendications 31 à 37, dans lequel le troisième organe de serrage comprend une courroie (732) permettant de fixer, de façon libérable, la partie arrière d'une bicyclette (600), la courroie (732) comprenant un système à boucle adapté pour s'appliquer sur les deux extrémités de la courroie, et les maintenir fermement, la courroie étant couplée, avec possibilité de fixation, au bras supérieur (710) du premier organe de serrage par l'intermédiaire d'une encoche (714) adaptée ménagée dans celui-ci, et la courroie (732) comprenant, en outre, des moyens adaptés pour tendre, de façon sélective, la courroie, afin de fixer et verrouiller la partie arrière d'une bicyclette et pour relâcher la tension de la courroie (732), permettant ainsi de démonter la partie arrière d'une bicyclette du deuxième organe de serrage (25).

39. Porte-bicyclettes modulaire selon l'une quelconque des revendications 31 à 37, dans lequel le troisième organe de serrage comprend une courroie (732) permettant de fixer, de façon libérable, la partie arrière d'une bicyclette (600), la courroie comprenant un système à boucle adapté pour s'appliquer sur les deux extrémités de la courroie (732), et les maintenir fermement, la courroie (732) étant attachée, avec possibilité de fixation, sur un bras supérieur par l'intermédiaire d'une encoche (714) adaptée ménagée dans celui-ci, le troisième organe de serrage étant couplé au premier organe de serrage, ce qui fait que le bras supérieur est articulé sur le bras supérieur (710) du premier organe de serrage, la courroie (732) comprenant, en outre, des moyens adaptés pour tendre, de façon sélective, la courroie (732), afin de fixer et verrouiller la partie arrière d'une bicyclette (600) et pour relâcher la tension de la courroie (732), permettant ainsi de démonter la partie arrière d'une bicyclette (600) du troisième organe de serrage (25).

40. Porte-bicyclettes modulaire selon la revendication 38, dans lequel le bras supérieur (710) présente une section transversale sensiblement en forme de U.

41. Porte-bicyclettes modulaire selon la revendication 38, dans lequel le bras inférieur (700) présente une section transversale sensiblement en forme de U.

42. Porte-bicyclettes modulaire selon la revendication 39, dans lequel le bras supérieur (710) présente une section transversale sensiblement en forme de U.

43. Porte-bicyclettes modulaire selon la revendication 39, dans lequel le bras inférieur (700) présente une section transversale sensiblement en forme de U.

44. Porte-bicyclettes modulaire selon les revendications 38 ou 40 ou 41, destiné à fixer, de façon libérable, au moins une paire de bicyclettes comprenant une première et une deuxième bicyclette de structure prédéterminée, **caractérisé en ce que** le porte-bicyclette comprend, pour chaque paire de bicyclettes (600), au moins deux premiers organes de serrage (15) couplés, chacun, à un troisième organe de serrage, un premier organe de serrage (15), qui est couplé à un troisième organe de serrage étant monté sur la première barre transversale (7), et l'autre premier organe de serrage (15), couplé à un troisième organe de serrage, étant monté sur la deuxième barre transversale (107), les premiers organes de serrage montés sur la première et la deuxième barre transversale (107) assurant respectivement la fixation des parties avant de la première et de la deuxième bicyclette (600), et les troisièmes organes de serrage montés sur les deuxième et première barres transversales (7, 107) constituant les deuxièmes organes de serrage correspondants destinés à assurer respectivement la fixation des parties arrière de la première et de la deuxième bicyclette.

45. Porte-bicyclettes modulaire selon les revendications 39 ou 42 ou 43, destiné à fixer, de façon libérable, au moins une paire de bicyclettes comprenant une première et une deuxième bicyclette de structure prédéterminée, **caractérisé en ce que** le porte-bicyclette comprend au moins deux premiers organes de serrage (15) couplés, chacun, à un troisième organe de serrage, un premier organe de serrage (15), qui est couplé à un troisième organe de serrage étant monté sur la première barre transversale (7), et l'autre premier organe de serrage (15), couplé à un troisième organe de serrage, étant monté sur la deuxième barre transversale (107), les premiers organes de serrage montés sur la première et la deuxième barre transversale assurant respectivement la fixation des parties avant des première et deuxième bicyclettes (600), et les troisièmes organes de serrage montés sur les deuxième et première barres transversales constituant les deuxièmes organes de serrage correspondants destinés à assurer respectivement la fixation des parties arrière des première et deuxième bicyclettes (600).

46. Porte-bicyclettes modulaire selon la revendication 8, dans lequel le premier organe de serrage (15) comprend un élément longitudinal supérieur articulé (514), articulé sur un élément longitudinal inférieur (512) par l'intermédiaire d'un élément de verrouillage (518), afin de permettre à l'élément longitudinal supérieur (514) d'être amené à pivoter et à se dégager, si on le souhaite, de l'élément longitudinal inférieur (512) afin que soit logé, entre eux, un côté d'un guidon (209) de bicyclette (600), et d'être amené à pivoter en se rapprochant de l'élément longitudinal inférieur afin de permettre à une extrémité libre de l'élément longitudinal supérieur (514) de coopérer de façon libérable avec une extrémité correspondante de l'élément longitudinal inférieur, l'élément de verrouillage (518) étant adapté pour verrouiller ensemble l'élément longitudinal supérieur avec l'élément longitudinal inférieur lorsque l'extrémité libre de l'élément longitudinal supérieur coopère avec une extrémité correspondante de l'élément longitudinal inférieur (514).

47. Porte-bicyclettes modulaire selon la revendication 46, dans lequel l'élément articulé (514) comprend un évidement en forme de crochet (515) destiné à coopérer avec un axe complémentaire (517) prévu dans l'extrémité correspondante de l'élément longitudinal inférieur.

48. Porte-bicyclettes modulaire selon la revendication 8, dans lequel le premier organe de serrage (15) comprend un élément flexible supérieur articulé sur un élément longitudinal inférieur (512) par l'intermédiaire d'un élément de verrouillage (518), afin de permettre à l'élément longitudinal supérieur (514) d'être amené à pivoter et à se dégager, si on le souhaite, de l'élément longitudinal inférieur (512) afin que soit logé, entre eux, un côté d'un guidon (209) de bicyclette (600), et d'être amené à pivoter en se rapprochant de l'élément longitudinal inférieur (512) afin de permettre à une extrémité libre de l'élément flexible supérieur de coopérer de façon libérable avec une extrémité correspondante de l'élément longitudinal inférieur (512), l'élément de verrouillage étant adapté pour verrouiller ensemble l'élément flexible supérieur avec l'élément longitudinal inférieur lorsque l'extrémité libre de l'élément flexible supérieur coopère avec une extrémité correspondante de l'élément longitudinal inférieur (514).

49. Porte-bicyclettes modulaire selon la revendication 48, dans lequel l'élément flexible comprend un axe (520) destiné à coopérer avec un évidement complémentaire prévu dans l'extrémité correspondante de l'élément longitudinal inférieur.

50. Porte-bicyclettes modulaire selon la revendication 47, dans lequel le premier organe de serrage (15) est fixé à la première ou à la deuxième barre transversale (7, 107) au moyen d'un système de retenue adapté en forme de U (260).

51. Porte-bicyclettes modulaire selon la revendication 49, dans lequel le premier organe de serrage est fixé à la première ou à la deuxième barre transversale (7, 107) au moyen d'un système de retenue adapté en forme de U (260).

52. Porte-bicyclettes modulaire selon la revendication 9, dans lequel le deuxième organe de serrage (25) comprend une base destinée à recevoir un siège de bicyclette et comprend, en outre, une courroie permettant de fixer, de façon libérable, la partie arrière d'une bicyclette (600), la courroie comprenant un système à boucle adapté pour s'appliquer sur les deux extrémités de la courroie, et les maintenir fermement ensemble, la courroie étant couplée, avec possibilité de fixation, à la base, par l'intermédiaire d'une encoche adaptée ménagée dans celui-ci, et la courroie comprenant, en outre, des moyens adaptés pour tendre, de façon sélective, la courroie, afin de fixer et verrouiller la partie arrière d'une bicyclette (600) et pour relâcher la tension de la courroie, permettant ainsi de démonter la partie arrière d'une bicyclette du deuxième organe de serrage.

53. Porte-bicyclettes modulaire selon la revendication 52, dans lequel la base comprend une patte inférieure destinée à monter le deuxième organe de serrage sur la deuxième barre transversale, et deux ailes en dièdre (562) assemblées aux pattes inférieures par des brides verticales correspondantes, tranversalement espacées.

54. Porte-bicyclettes modulaire selon la revendication 53, dans lequel le deuxième organe de serrage (25) est fixé à la première ou à la deuxième barre transversale (7, 107) au moyen d'un système de retenue adapté en forme de U (260).

55. Porte-bicyclettes modulaire selon la revendication 54, dans lequel le deuxième organe de serrage (25) est susceptible d'être fixé à la première ou à la deuxième barre transversale (7, 107), dans une gamme de différentes positions longitudinales par rapport à celles-ci, grâce à une pluralité de fentes susceptibles de coopérer avec le système de retenue en forme de U.

56. Porte-bicyclettes modulaire selon la revendication 47 à 55, dans lequel le premier organe de serrage comprend des axes avant et arrière (542, 544) qui permettent au premier organe de serrage d'être couplé à un troisième organe de serrage.

57. Porte-bicyclettes modulaire selon la revendication 53 et selon la revendication 56, dans lequel le premier organe de serrage (15) est susceptible d'être couplé au troisième organe de serrage, le troisième organe de serrage constituant un deuxième organe de serrage, le troisième organe de serrage comprenant, en outre, des ouvertures avant et arrière permettant au troisième organe de serrage d'être couplé à un premier organe de serrage (15).

58. Porte-bicyclettes modulaire selon la revendication 57, comprenant, en outre, une platine de couplage (590) destinée à coupler le premier organe de serrage au troisième organe de serrage.

59. Porte-bicyclettes modulaire selon la revendication 58, dans lequel la platine de couplage (590) est susceptible d'être montée sur le troisième organe de serrage par l'intermédiaire des ouvertures, et dans lequel la platine de couplage (590) est susceptible de coopérer avec les axes avant et arrière (542, 544) du premier organe de serrage.

60. Porte-bicyclettes modulaire selon la revendication 59, dans lequel le premier organe de serrage comprend une fente adaptée (554) à une de ses extrémités longitudinales, la courroie étant couplée, avec possibilité de fixation, au premier organe de serrage, à la place de la base, afin de verrouiller ensemble le premier organe de serrage et le troisième organe de serrage à la partie arrière d'une bicyclette (600).

61. Porte-bicyclettes modulaire selon la revendication 47, dans lequel l'élément longitudinal inférieur (512', 512") du premier organe de serrage comprend une extension longitudinale pourvue de moyens de fixation pour fixer le premier organe de serrage à la première ou à la deuxième barre transversale (7, 107), en les montant de façon espacée dans la direction longitudinale.

62. Porte-bicyclettes modulaire selon la revendication 61, dans lequel l'extension longitudinale permet au premier organe de serrage d'être monté, si on le souhaite, sur la première ou la deuxième barre transversale (7, 107), en étant espacé dans la direction longitudinale, soit vers l'avant, soit vers l'arrière.

63. Porte-bicyclettes modulaire selon la revendication 62, dans lequel le premier organe de serrage est fixé à la première ou à la deuxième barre transversale (7, 107) au moyen d'un système de retenue adapté en forme de U (260).

64. Porte-bicyclettes modulaire selon les revendications 53 et 63 destiné à fixer, de façon libérable, au moins une paire de bicyclettes comprenant une première et une deuxième bicyclette de structure prédéterminée, disposées en quinconce et en parallèle, **caractérisé en ce que** le porte-bicyclette comprend au moins deux premiers organes de serrage (15), un premier organe de serrage (15) étant monté sur la première barre transversale (7) pour assurer respectivement la fixation de la partie avant de la première bicyclette (600) de façon décalée vers l'avant, et l'autre premier organe de serrage (15) étant monté sur la première barre transversale (7) de façon décalée vers l'arrière pour assurer la fixation de la partie avant de la deuxième bicyclette, et comprend également les deuxièmes organes de serrage (25) qui assurent la fixation de la partie arrière des première et deuxième bicyclettes sur la deuxième barre transversale (107).

65. Porte-bicyclettes modulaire selon les revendications 54 et 63, destiné à fixer, de façon libérable, au moins une paire de bicyclettes comprenant une première et une deuxième bicyclette de structure prédéterminée, disposées en quinconce et en parallèle, **caractérisé en ce que** le porte-bicyclette comprend au moins deux premiers organes de serrage (15), un premier organe de serrage (15) étant monté sur la première barre transversale pour assurer respectivement la fixation de la partie avant de la première bicyclette (600) de façon espacée vers l'avant, et l'autre premier organe de serrage étant monté sur la première barre transversale (7) de façon espacée vers l'arrière pour assurer la fixation de la partie avant de la deuxième bicyclette (600), et comprend également des deuxièmes organes de serrage (25) correspondants qui assurent la fixation de la partie arrière des première et deuxième bicyclettes sur la deuxième barre transversale (107).

66. Porte-bicyclettes modulaire selon la revendication 47, dans lequel le premier organe de serrage est susceptible d'être couplé au troisième organe de serrage au moyen d'un pont longitudinal (599), le pont longitudinal étant monté sur la première barre transversale (7) grâce à des moyens de montage adaptés, le premier organe de serrage (15) étant assemblé à la première barre transversale à une extrémité longitudinale de ceux-ci, et le troisième organe de serrage étant assemblé au pont à l'autre extrémité de ceux-ci, le troisième organe de serrage constituant un autre premier organe de serrage.

67. Porte-bicyclettes modulaire selon la revendication 66, dans lequel le pont longitudinal (599) ne forme qu'une seule pièce avec les éléments longitudinaux inférieurs du premier organe de serrage et du troisième organe de serrage.

68. Porte-bicyclettes modulaire selon la revendication 67, dans lequel le pont longitudinal (599) est fixé à la première ou à la deuxième barre transversale (7, 107) au moyen d'un système de retenue adapté en forme de U (260).

69. Porte-bicyclettes modulaire selon la revendication 66, dans lequel au moins le troisième organe de serrage ou le premier organe de serrage est adapté, en outre, à être couplé à un quatrième organe de serrage.

70. Porte-bicyclettes modulaire selon la revendication 69, dans lequel au moins le premier organe de serrage ou le troisième organe de serrage comprend des axes avant et arrière (542, 544) permettant au premier organe de serrage d'être couplé au quatrième organe de serrage.

71. Porte-bicyclettes modulaire selon la revendication 53 et la revendication 70, dans lequel au moins le premier organe de serrage (15) ou le troisième organe de serrage est adapté à être couplé au quatrième organe de serrage, le quatrième organe de serrage étant du même type que le deuxième organe de serrage, le quatrième organe de serrage comprenant, en outre, des axes avant et arrière permettant au quatrième organe de serrage d'être couplé au premier organe de serrage (15).

72. Porte-bicyclettes modulaire selon la revendication 71, comprenant, en outre, une platine de couplage (590) servant à coupler au moins le premier organe de serrage ou le troisième organe de serrage au quatrième organe de serrage.

73. Porte-bicyclettes modulaire selon la revendication 72, dans lequel la platine de couplage (590) est susceptible d'être montée sur le quatrième organe de serrage grâce aux ouvertures, la platine de couplage étant susceptible de coopérer avec les axes avant et arrière (542, 544) d'au moins le premier organe de serrage ou le troisième organe de serrage.

74. Porte-bicyclettes modulaire selon la revendication 73, dans lequel au moins le premier organe de serrage ou le troisième organe de serrage comprend une fente adaptée, à une de ses extrémités longitudinales, la courroie étant couplée, avec possibilité de fixation, au premier organe de serrage ou au troisième organe de serrage, respectivement, à la place de la base, afin de verrouiller ensemble le premier organe de serrage ou le troisième organe de serrage à la partie arrière d'une bicyclette (600).

75. Porte-bicyclettes modulaire selon l'une quelconque des revendications 1 à 74, dans lequel au moins le premier organe de serrage ou le deuxième organe de serrage ou le troisième organe de serrage est du type "à verrouillage par effet géométrique".
